(19) Europäisches Patentamt
European Patent Office
Office européen des brevets

(11) EP 2 988 966 B1

(12) EUROPEAN PATENT SPECIFICATION

(45) Date of publication and mention
of the grant of the patent:
17.05.2017 Bulletin 2017/20

(51) Int Cl.:
$H02J\ 5/00^{(2016.01)}$    $B60L\ 11/18^{(2006.01)}$

(21) Application number: 14723110.4

(22) Date of filing: 23.04.2014

(86) International application number:
PCT/IB2014/000599

(87) International publication number:
WO 2014/174358 (30.10.2014 Gazette 2014/44)

(54) **POWER RECEIVING DEVICE, PARKING ASSIST SYSTEM, VEHICLE, AND POWER TRANSFER SYSTEM**

STROMEMPFANGENDE VORRICHTUNG, PARKHILFESYSTEM, FAHRZEUG UND LEISTUNGSÜBERTRAGUNGSSYSTEM

DISPOSITIF RÉCEPTEUR D'ÉNERGIE, SYSTÈME D'AIDE AU PARCAGE, VÉHICULE ET SYSTÈME DE TRANSFERT D'ÉNERGIE

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR

(30) Priority: 26.04.2013 JP 2013093832

(43) Date of publication of application:
02.03.2016 Bulletin 2016/09

(73) Proprietor: TOYOTA JIDOSHA KABUSHIKI KAISHA
Toyota-shi, Aichi-ken, 471-8571 (JP)

(72) Inventors:
• ICHIKAWA, Shinji
  Toyota-shi,
  Aichi-ken, 471-8571 (JP)
• YAMADA, Hideaki
  Toyota-shi,
  Aichi-ken, 471-8571 (JP)

(74) Representative: Intès, Didier Gérard André et al
Cabinet Beau de Loménie
158 rue de l'Université
75340 Paris Cedex 07 (FR)

(56) References cited:
WO-A1-2012/058466    US-A1- 2011 285 349
US-A1- 2012 262 002

**Description**

BACKGROUND OF THE INVENTION

1. Field of the Invention

The invention relates to a power receiving device, a parking assist system, a vehicle and a power transfer system.

2. Description of Related Art

There are known a hybrid vehicle and an electric vehicle. These electromotive vehicles are equipped with a battery, and drive driving wheels by using electric power. In recent years, there has been developed a technique for contactlessly charging a battery. In order to contactlessly charge the battery with high efficiency, it is required for a power receiving unit and a power transmitting unit to be arranged at mutually appropriate positions.

Japanese Patent Application Publication No. 2012-080770 (JP 2012-080770 A) describes a vehicle that includes a parking assist system. The parking assist system includes a power receiving unit. The power receiving unit contactlessly receives electric power from a power transmitting unit provided outside the vehicle. The power receiving unit is also used to detect a relative position between the power receiving unit and the power transmitting unit. Information about the relative position is utilized at the time when the vehicle is guided to an appropriate parking position.

Japanese Patent Application Publication No. 2011-120387 (JP 2011-120387 A) describes a charging control system for an electromotive vehicle. Contactless charging is desirably carried out in a state where a clearance between a power receiving unit and a power transmitting unit is small. In the system described in the above publication, the power receiving unit is moved downward by elevating means. A battery is charged in a state where the power receiving unit is located near the power transmitting unit arranged at a ground side.

SUMMARY OF THE INVENTION

The invention provides a power receiving device that is able to accurately detect a position of a power transmitting unit, a parking assist system that includes the power receiving device, and a vehicle that includes the power receiving device. In addition, the invention provides a power transfer system in which the power receiving device is able to accurately detect a position of a power transmitting device.

A first aspect of the invention provides a power receiving device. The power receiving device includes: a power receiving unit configured to move among a retracted position, a detection position and a power receiving position, the power receiving unit being configured to contactlessly receive electric power from a power transmitting unit in a state where the power receiving unit is arranged at the power receiving position, the power receiving unit being configured to detect a strength of a magnetic field or electric field that is formed by the power transmitting unit in a state where the power receiving unit is arranged at the detection position, a distance between the power receiving position and the detection position being shorter than a distance between the power receiving position and the retracted position; and a drive mechanism configured to drive the power receiving unit among the retracted position, the detection position and the power receiving position.

In the power receiving device according to the first aspect of the invention, the distance between the detection position and the power receiving position may be shorter than a distance between the detection position and the retracted position.

In the power receiving device according to the first aspect of the invention, the distance between the detection position and the power receiving position may be longer than a distance between the detection position and the retracted position.

In the power receiving device according to the first aspect of the invention, a difference between a natural frequency of the power transmitting unit and a natural frequency of the power receiving unit may be smaller than or equal to 10% of the natural frequency of the power receiving unit. In the power receiving device according to the first aspect of the invention, a coupling coefficient between the power receiving unit and the power transmitting unit may be smaller than or equal to 0.7.

In the power receiving device according to the first aspect of the invention, the power receiving unit may be configured to receive electric power from the power transmitting unit via at least one of a magnetic field that is formed between the power receiving unit and the power transmitting unit and that oscillates at a predetermined frequency and an electric field that is formed between the power receiving unit and the power transmitting unit and that oscillates at a predetermined frequency.

A second aspect of the invention provides a vehicle. The vehicle includes: a floor panel; a mounted device installed on the floor panel; and the power receiving device according to the first aspect, the power receiving device including a power receiving unit configured to move among a retracted position, a detection position and a power receiving position. A level of the power receiving unit in a vertical direction is lower than a level of the mounted device in the vertical direction in a state where the power receiving unit is arranged at the detection position.

A third aspect of the invention provides a parking assist system. The parking assist system includes: a vehicle drive unit configured to drive a vehicle; the power receiving device according to the first aspect; and a controller configured to move the vehicle by controlling the vehicle drive unit on the basis of the strength of the magnetic field, detected by the power receiving unit.

A fourth aspect of the invention provides a power transfer system. The power transfer system includes: a power transmitting device including a power transmitting unit; and the power receiving device according to the first aspect. The power receiving device is configured to contactlessly receive electric power transmitted from the power transmitting device in a state where the power receiving device faces the power transmitting device.

With the power receiving device, the parking assist system, the vehicle and the power transfer system according to the first to fourth aspects of the invention, it is possible to accurately detect the position of the power transmitting unit and/or the position of the power receiving unit.

BRIEF DESCRIPTION OF THE DRAWINGS

Features, advantages, and technical and industrial significance of exemplary embodiments of the invention will be described below with reference to the accompanying drawings, in which like numerals denote like elements, and wherein:

FIG. 1 is a left side view that shows an electromotive vehicle (vehicle) including a power receiving device according to an embodiment;

FIG. 2 is an enlarged left side view that shows a portion near the power receiving device of the electromotive vehicle;

FIG. 3 is a bottom view that shows the electromotive vehicle;

FIG. 4 is an exploded perspective view that shows the power receiving device and an external power supply device (power transmitting device);

FIG. 5 is a perspective view that shows the electromotive vehicle including the power receiving device and the external power supply device including the power transmitting device;

FIG. 6 is a view that schematically shows a power transfer system according to the embodiment;

FIG. 7 is a view that shows the details of the power transfer system according to the embodiment;

FIG. 8 is a functional block diagram of a controller shown in FIG. 7;

FIG. 9 is a perspective view that shows a power receiving unit and a drive mechanism;

FIG. 10 is a side view that schematically shows a switching unit, and shows a state when the switching unit is viewed in a direction indicated by the arrow A in FIG. 9;

FIG. 11 is a side view that shows the power receiving unit, a casing and the drive mechanism at the time when the electromotive vehicle is stopped at a predetermined position, and shows a state where the power receiving unit is arranged at a retracted position;

FIG. 12 is a side view that shows the power receiving unit, the casing and the drive mechanism at the time when the electromotive vehicle is stopped at the predetermined position, and shows a state where the power receiving unit is arranged at a detection position;

FIG. 13 is a side view that shows the power receiving unit, the casing and the drive mechanism at the time when the electromotive vehicle is stopped at the predetermined position, and shows a state where the power receiving unit is arranged at a power receiving position;

FIG. 14 is a view for illustrating a state at the time when parking is guided with the use of a camera (first guiding control);

FIG. 15 is a flowchart (first half) for illustrating control that is executed in the step in which the position of the electromotive vehicle is aligned at the time when noncontact power feeding is carried out;

FIG. 16 is a flowchart (second half) for illustrating control that is executed in the step in which the position of the electromotive vehicle is aligned at the time when contactless power feeding is carried out;

FIG. 17 is a graph that shows the correlation between a vehicle moving distance and the magnetic field strength of a test magnetic field that is detected by the power receiving unit;

FIG. 18 is a flowchart for illustrating detection of a vehicle moving distance in step S9 of FIG. 16;

FIG. 19 is an operation waveform chart that shows an example of operation in which a vehicle speed is set to zero through the flowchart of FIG. 18;

FIG. 20 is a flowchart for illustrating a process of operation mode 2 that is executed in step S20 of FIG. 16;

FIG. 21 is a view that shows a simulation model of a power transfer system;

FIG. 22 is a graph that shows the correlation between a difference in natural frequency of each of a power transmitting unit and a power receiving unit and a power transfer efficiency;

FIG. 23 is a graph that shows the correlation between a power transfer efficiency at the time when an air gap is varied and the frequency of a current that is supplied to a primary coil in a state where the natural frequency is fixed;

FIG. 24 is a graph that shows the correlation between a distance from a current source or a magnetic current source and the strength of an electromagnetic field;

FIG. 25 is a side view that shows the power receiving unit, the casing and the drive mechanism at the time when an electromotive vehicle is stopped at the predetermined position according to a first alternative embodiment;

FIG. 26 is a side view that shows the power receiving unit, the casing and the drive mechanism at the time when an electromotive vehicle is stopped at the predetermined position according to a second alternative embodiment, and shows a state where the power receiving unit is arranged at the retracted position;

FIG. 27 is a side view that shows the power receiving unit, the casing and the drive mechanism at the time when the electromotive vehicle is stopped at the predetermined position according to the second alternative embodiment, and shows a state where the power receiving unit is arranged at the detection position;

FIG. 28 is a side view that shows the power receiving unit, the casing and the drive mechanism at the time when the electromotive vehicle is stopped at the predetermined position according to the second alternative embodiment, and shows a state where the power receiving unit is arranged at the power receiving position; and

FIG. 29 is a side view that shows the power receiving unit, the casing and the drive mechanism at the time when an electromotive vehicle is stopped at the predetermined position according to a third alternative embodiment.

DETAILED DESCRIPTION OF EMBODIMENTS

Hereinafter, an embodiment of the invention will be described with reference to the accompanying drawings. In the description of the embodiment, when the number, the amount, and the like, are referred to, the scope of the invention is not always limited to those number, amount, and the like, unless otherwise specified. In the description of the embodiment, like reference numerals denote the same or corresponding components, and the overlap description may be omitted.

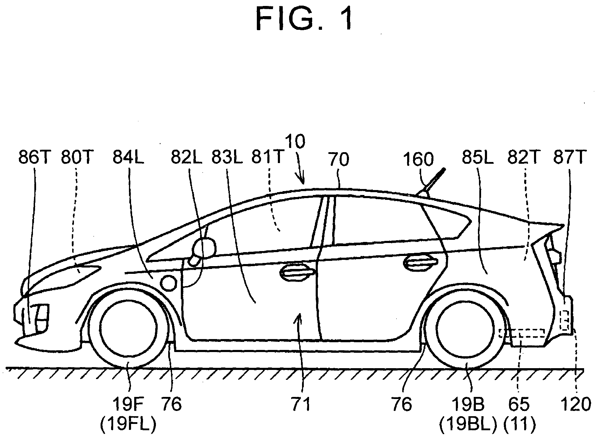

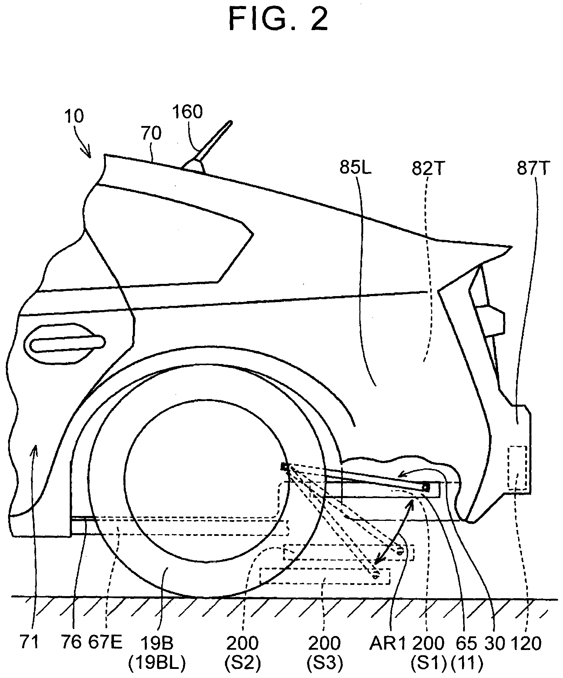

Initially, the external appearance configuration of an electromotive vehicle 10 will be described. FIG. 1 is a left side view that shows the electromotive vehicle 10 (vehicle) including a power receiving device 11 according to the embodiment. FIG. 2 is an enlarged left side view that shows a portion near the power receiving device 11 of the electromotive vehicle 10. In FIG. 2, for the sake of convenience, part of a rear fender 85L (described later) is shown, and the power receiving device 11 (casing 65) and a drive mechanism 30 are illustrated by the continuous line.

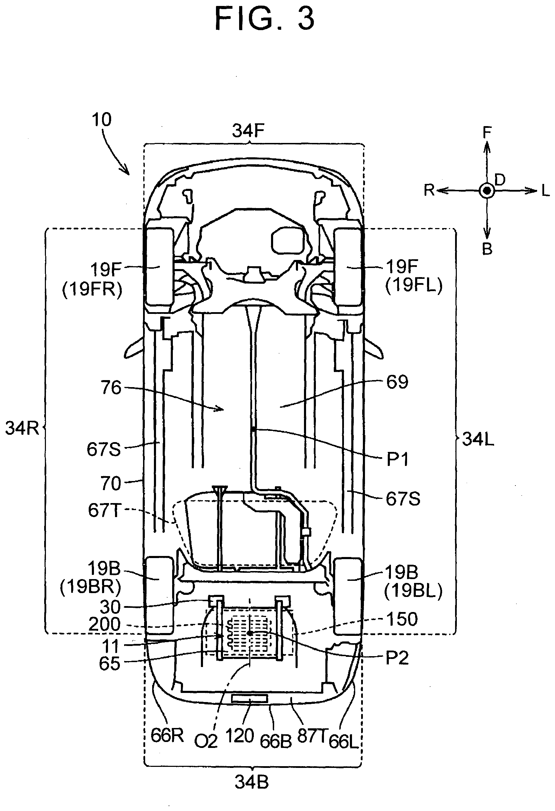

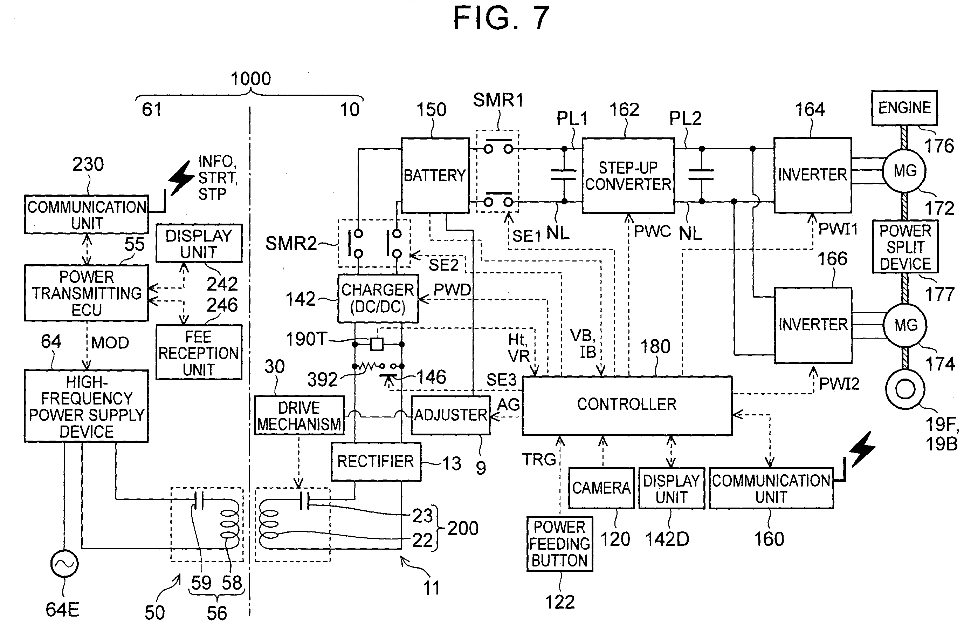

As shown in FIG. 1, the electromotive vehicle 10 includes a vehicle body 70 and wheels 19F, 19B (see wheels 19FL, 19FR, 19BL, 19BR in FIG. 3). A drive compartment 80T, a passenger compartment 81T and a luggage compartment 82T are provided inside the vehicle body 70. An engine (not shown) (see an engine 176 in FIG. 7), and the like, are accommodated in the drive compartment 80T.

The electromotive vehicle 10 includes a battery (not shown) (see a battery 150 in FIG. 7), and functions as a hybrid vehicle. The electromotive vehicle 10 may function as a fuel-cell vehicle or may function as an electric vehicle as long as the electromotive vehicle 10 is a vehicle that is driven by a motor. In the present embodiment, a power receiving object is a vehicle; instead, the power receiving object may be a device other than the vehicle.

A passenger opening 82L, a door 83L, a front fender 84L, a front bumper 86T, a rear fender 85L and a rear bumper 87T are provided at a left side face 71 of the vehicle body 70. The passenger opening 82L communicates with the passenger compartment 81T. The door 83L opens or closes the passenger opening 82L.

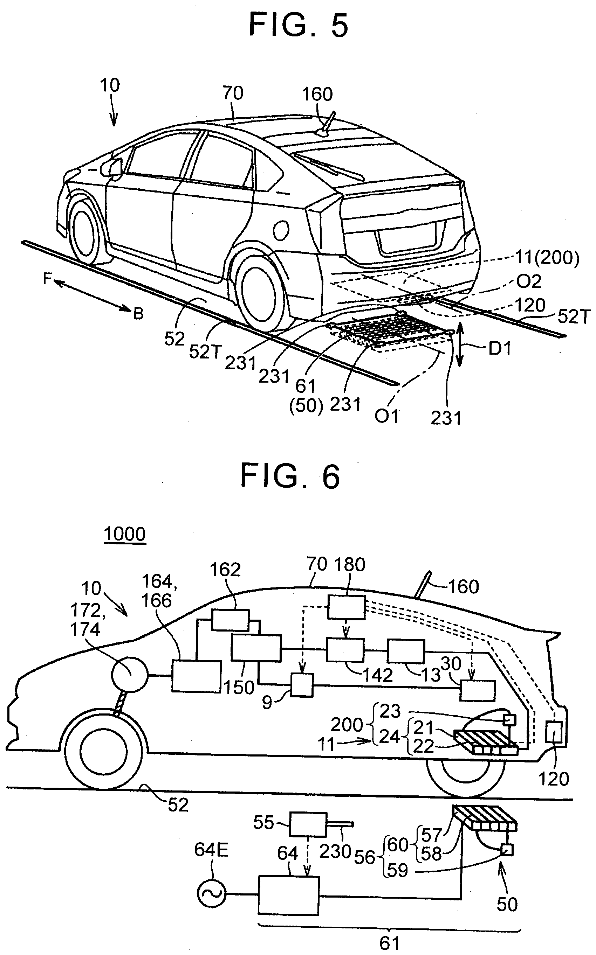

A camera 120 is provided near the rear bumper 87T. The camera 120 is used to detect a relative positional relationship between the electromotive vehicle 10 (power receiving device 11) and an external power supply device 61 (see FIG. 5) (described later). The camera 120 is, for example, fixed to the rear bumper 87T (see FIG. 3) so as to be able to capture an image behind the electromotive vehicle 10. A communication unit 160 is provided at the upper portion of the vehicle body 70. The communication unit 160 is a communication interface for carrying out communication between the electromotive vehicle 10 and the external power supply device 61 (see FIG. 5).

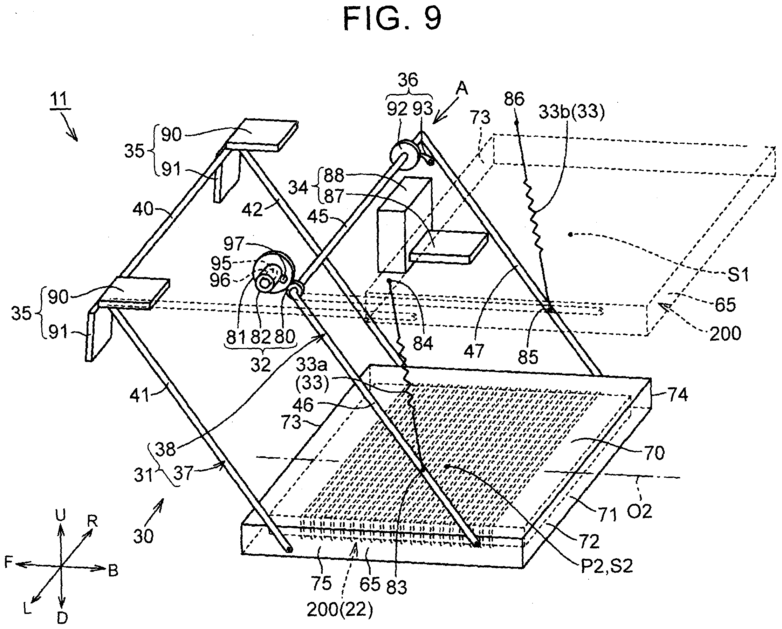

As shown in FIG. 1 and FIG. 2, the vehicle body 70 has a bottom face 76. The power receiving device 11 and a power receiving unit 200 (see FIG. 3) included in the power receiving device 11 are provided at the bottom face 76 of the vehicle body 70. A casing 65 accommodates the power receiving unit 200. The casing 65 of the power receiving device 11 is supported by a drive mechanism 30 (see FIG. 2), and is configured to be movable among a retracted position S1, a detection position S2 and a power receiving position S3 (described in detail later with reference to FIG. 9, and the like).

When the drive mechanism 30 is driven, the power receiving unit 200 in the casing 65 moves upward or downward as indicated by the arrow AR1 in FIG. 2. Through upward or downward movement, the power receiving unit 200 moves among the retracted position S1, the detection position S2 and the power receiving position S3. While the electromotive vehicle 10 is traveling, the power receiving unit 200 is arranged at the retracted position S1. When the power receiving unit 200 is arranged at the detection position S2, the power receiving unit 200 is able to detect the strength of a magnetic field or electric field that is formed by a power transmitting unit 56 of the external power supply device 61 (see FIG. 5) at a place at which the power receiving unit 200 is located (described later in detail). When the power receiving unit 200 is arranged at the power receiving position S3, the power receiving unit 200 is able to contactlessly receive electric power through a magnetic field or electric field that is formed by the power transmitting unit 56 of the external power supply device 61 (see FIG. 5) (described later in detail).

FIG. 3 is a bottom view that shows the electromotive vehicle 10. In FIG. 3, "D" denotes a vertically downward direction D. "L" denotes a vehicle leftward direction L. "R" denotes a vehicle rightward direction R. "F" denotes a vehicle forward direction F. "B" denotes a vehicle rearward direction B. The power receiving unit 200 and the drive mechanism 30 are provided at the bottom face 76 of the vehicle body 70. The case where the power receiving unit 200 is provided at the bottom face 76 includes the case where the power receiving unit 200 is accommodated in the casing 65 (described later) in a state where the power receiving device 11 is provided at the bottom face 76.

The bottom face 76 has a center portion P1. The center portion P1 is located at the center of the electromotive vehicle 10 in the longitudinal direction, and is located at the center of the electromotive vehicle 10 in the width direction. The electromotive vehicle 10 includes the front wheels 19FR, 19FL arranged in the width direction of the electromotive vehicle 10 and the rear wheels 19BR, 19BL arranged in the width direction of the electromotive vehicle 10. The front wheels 19FR, 19FL may constitute driving wheels, the rear wheels 19BR, 19BL may constitute driving wheels, or all of these front wheels and rear wheels may constitute driving wheels.

The bottom face 76 of the electromotive vehicle 10 is a visually recognizable region within the electromotive vehicle 10 when the electromotive vehicle 10 is viewed from a position distanced downward in the vertical direction with respect to a ground surface in a state where the wheels 19FL, 19FR, 19RL, 19RB of the electromotive vehicle 10 are in contact with the ground surface. The outer peripheral portion of the bottom face 76 includes a front peripheral portion 34F, a rear peripheral portion 34B, a right peripheral portion 34R and a left peripheral portion 34L.

The front peripheral portion 34F is located on a side in the vehicle forward direction F with respect to the front wheel 19FR and the front wheel 19FL. The right peripheral portion 34R and the left peripheral portion 34L are arranged in the width direction of the electromotive vehicle 10. The right peripheral portion 34R and the left peripheral portion 34L are located between the front peripheral portion 34F and the rear peripheral portion 34B. The rear peripheral portion 34B is located on a side in the vehicle rearward direction B with respect to the rear wheel 19BR and the rear wheel 19BL.

The rear peripheral portion 34B has a rear side portion 66B, a right rear side portion 66R and a left rear side portion 66L. The rear side portion 66B extends in the width direction of the electromotive vehicle 10. The right rear side portion 66R is continuous with one end of the rear side portion 66B, and extends toward the rear wheel 19BR. The left rear side portion 66L is continuous with the other end of the rear side portion 66B, and extends toward the rear wheel 19BL.

A floor panel 69, side members 67S and cross members are provided at the bottom face 76 of the electromotive vehicle 10. The floor panel 69 has a plate shape, and partitions the inside of the vehicle body 70 and the outside of the vehicle body 70 from each other. The side members 67S are arranged at the lower face of the floor panel 69. An exhaust muffler 67E (see FIG. 2), a fuel tank 67T (see FIG. 3), an exhaust pipe, and the like, are provided on the floor panel 69 as mounted devices of the vehicle body 70.

The drive mechanism 30 is provided at the bottom face 76 of the electromotive vehicle 10, and is arranged between the rear wheel 19BR and the rear wheel 19BL. The drive mechanism 30 supports the casing 65. In a state where the casing 65 (power receiving unit 200) is arranged at the bottom face 76 of the electromotive vehicle 10, the casing 65 (power receiving unit 200) is located between the rear wheel 19BR and the rear wheel 19BL. A battery 150 is arranged near the power receiving device 11.

Various methods may be employed in order to fix the drive mechanism 30 to the bottom face 76 of the vehicle body 70. For example, the drive mechanism 30 may be fixed to the bottom face 76 of the vehicle body 70 by suspending the drive mechanism 30 from the side members 67S or the cross members. The drive mechanism 30 may be fixed to the floor panel 69. The position at which the drive mechanism 30 is provided is not limited to the configuration shown in FIG. 3. The drive mechanism 30 may be provided on a side in the vehicle forward direction F with respect to the position of the drive mechanism 30, shown in FIG. 3, or may be provided on a side in the vehicle rearward direction B with respect to the position of the drive mechanism 30, shown in FIG. 3.

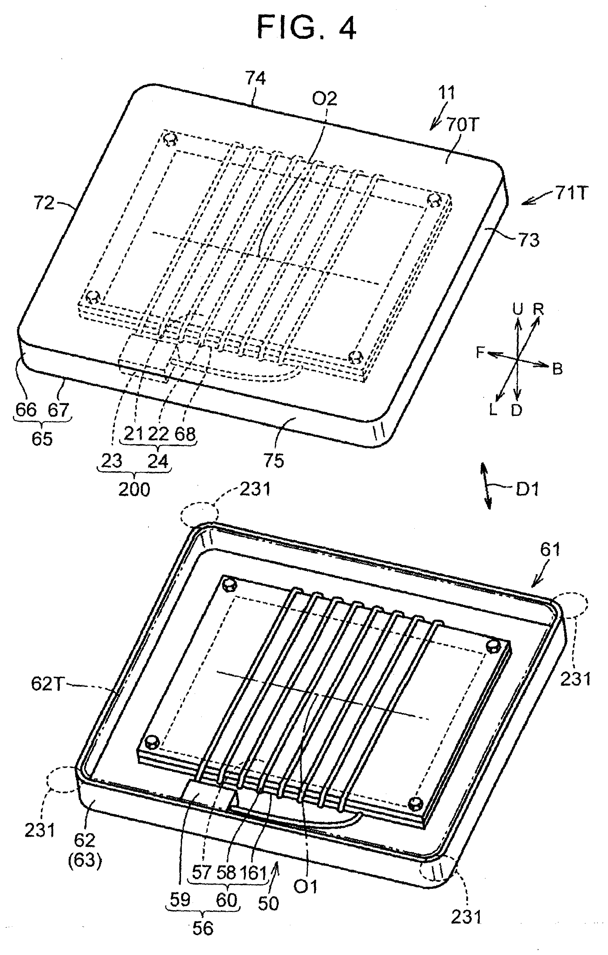

FIG. 4 is a perspective view that shows the power receiving device 11 and the external power supply device 61 (power transmitting device 50). FIG. 5 is a perspective view that shows the electromotive vehicle 10 including the power receiving device 11 and the external power supply device 61 including the power transmitting device 50. FIG. 5 shows a state where the electromotive vehicle 10 is stopped in a parking space 52 and the power receiving unit 200 of the electromotive vehicle 10 substantially faces the external power supply device 61 (power transmitting unit 56). FIG. 5 shows a state where the power receiving unit 200 is arranged at the retracted position of the vehicle body 70 (state where the power receiving unit 200 is not moved downward by the drive mechanism 30).

The external power supply device 61 will be described. As shown in FIG. 4 and FIG. 5, the external power supply device 61 includes the power transmitting device 50 and a plurality of light emitting portions 231 (see FIG. 5). The power transmitting device 50 includes the power transmitting unit 56 (see FIG. 4), and is provided inside the parking space 52 (see FIG. 5). As shown in FIG. 5, lines 52T are provided in the parking space 52 in order to allow the electromotive vehicle 10 to stop at a predetermined position. The lines 52T indicate a parking position or a parking area. The four light emitting portions 231 are provided in order to indicate the position of the power transmitting device 50, and are respectively located at four corners of the power transmitting device 50. Each of the light emitting portions 231, for example, includes a light emitting diode, and the like.

As shown in FIG. 4, the power transmitting unit 56 is accommodated inside a casing 62. The casing 62 includes a shield 63 and a lid 62T. The shield 63 is formed so as to open upward (in the vertically upward direction U). The lid 62T is provided so as to close the opening of the shield 63. The shield 63 is formed of a metal material, such as copper. The lid 62T is formed of a resin, or the like. In FIG. 4, the lid 62T is indicated by the alternate long and two-short dashed line in order to clearly show the power transmitting unit 56.

The power transmitting unit 56 includes a solenoid coil unit 60 and a capacitor 59 connected to the coil unit 60. The coil unit 60 includes a ferrite core 57, a power transmitting coil 58 (primary coil) and a fixing member 161. The fixing member 161 is formed of a resin. The ferrite core 57 is accommodated inside the fixing member 161. The power transmitting coil 58 is wound around the peripheral surface of the fixing member 161 so as to surround a winding axis O1.

The power transmitting coil 58 is formed so as to surround the winding axis O1 and be displaced in the direction in which the winding axis O1 extends, from one end of the power transmitting coil 58 toward the other end of the power transmitting coil 58. In FIG. 4, for the sake of convenience, an interval between adjacent coil wires that are used for the power transmitting coil 58 is shown wider than an actual interval. As will be described in detail later, the power transmitting coil 58 is connected to a high-frequency power supply device 64 (see FIG. 6).

In the embodiment, the winding axis O1 of the power transmitting coil 58 has a shape extending linearly. The winding axis O1 extends in a second direction (perpendicular direction in the present embodiment) that intersects with a facing direction D1 (first direction). The facing direction D1 is a direction in which the power transmitting coil 58 faces a power receiving coil 22 of the power receiving unit 200. The intersection of the winding axis O1 with the facing direction D1 in the present embodiment means that the winding axis O1 is perpendicular or substantially perpendicular to the facing direction D1. The substantially perpendicular to the facing direction D1 includes the case where the winding axis O1 intersects with the facing direction D1 in a state where the winding axis O1 deviates from the perpendicular state by an angle, for example, larger than 0° and smaller than or equal to 15°.

The winding axis O1 desirably intersects with the facing direction D1 at an angle larger than or equal to 80° and smaller than or equal to 100°. The winding axis O1 more desirably intersects with the facing direction D1 at an angle larger than or equal to 85° and smaller than or equal to 95°. The winding axis O1 optimally intersects with the facing direction D1 at an angle of 90°. The facing direction D1 in the present embodiment is a direction perpendicular to the surface (ground surface) of the parking space 52 (see FIG. 5), and the winding axis O1 extends in a direction parallel to the surface (ground surface) of the parking space 52.

For example, when the power transmitting coil 58 is sectioned by the unit length from one end of the power transmitting coil 58 in the longitudinal direction to the other end of the power transmitting coil 58 in the longitudinal direction, the winding axis O1 of the power transmitting coil 58 is formed by drawing a line that passes through the curvature center point of each unit length of the power transmitting coil 58 or near the curvature center point of each unit length. A method of deriving the winding axis O1 that is an imaginary line from the curvature center point of each unit length of the power transmitting coil 58 includes various approximation methods, such as linear approximation, logarithmic approximation and polynomial approximation.

The winding axis O1 of the power transmitting coil 58 in the present embodiment extends in a direction parallel to the lines 52T provided in the parking space 52 (see FIG. 5). The lines 52T are provided so as to extend along the longitudinal direction of the electromotive vehicle 10 at the time when the electromotive vehicle 10 is guided into the parking space 52. The power transmitting unit 56 (power transmitting device 50) is arranged such that the winding axis O1 extends along the longitudinal direction of the electromotive vehicle 10 stopped in the parking space 52 (see FIG. 5).

Next, the power receiving device 11 will be described. The power receiving unit 200 of the power receiving device 11 is accommodated inside the casing 65. The casing 65 includes a shield 66 and a lid 67. The shield 66 is formed so as to open downward (in the vertically downward direction D). The lid 67 is arranged so as to close the opening of the shield 66. The shield 66 is formed of a metal material, such as copper. The lid 67 is formed of a resin, or the like.

The shield 66 includes a top plate portion 70T and an annular peripheral wall portion 71T. The top plate portion 70T faces the floor panel 69 (see FIG. 3). The peripheral wall portion 71T has such a shape as to suspend in the vertically downward direction D from the outer periphery of the top plate portion 70T. The peripheral wall portion 71T has end face walls 72, 73 and side face walls 74, 75. The end face wall 72 and the end face wall 73 are arranged in a direction in which a winding axis O2 of the power receiving coil 22 extends. The side face wall 74 and the side face wall 75 are arranged between the end face wall 72 and the end face wall 73.

The power receiving unit 200 includes a solenoid coil unit 24 and a capacitor 23 connected to the coil unit 24. The coil unit 24 includes a ferrite core 21, the power receiving coil 22 (secondary coil) and a fixing member 68. The fixing member 68 is formed of a resin. The ferrite core 21 is accommodated inside the fixing member 68. The power receiving coil 22 is wound around the peripheral surface of the fixing member 68 so as to surround the winding axis O2.

The power receiving coil 22 is formed so as to surround the winding axis 02 and be displaced in the direction in which the winding axis 02 extends, from one end of the power receiving coil 22 toward the other end of the power receiving coil 22. In FIG. 4, for the sake of convenience, an interval between adjacent coil wires that are used for the power receiving coil 22 is shown wider than an actual interval. As will be described in detail later, the power receiving coil 22 is connected to a rectifier 13 (see FIG. 6). In FIG. 4, the power receiving unit 200 and the power transmitting unit 56 have the same size. Instead, the power receiving unit 200 and the power transmitting unit 56 may have mutually different sizes.

In the embodiment, the winding axis 02 of the power receiving coil 22 has a shape extending linearly. The winding axis 02 extends in the second direction (perpendicular direction in the present embodiment) that intersects with the facing direction D1 (first direction). The facing direction D1 is a direction in which the power transmitting coil 58 faces the power receiving coil 22 of the power receiving unit 200. The intersection of the winding axis 02 with the facing direction D1 in the present embodiment means that the winding axis 02 is perpendicular or substantially perpendicular to the facing direction D1. The substantially perpendicular to the facing direction D1 includes the case where the winding axis 02 intersects with the facing direction D1 in a state where the winding axis 02 deviates from the perpendicular state by an angle, for example, larger than 0° and smaller than or equal to 15°.

The winding axis 02 desirably intersects with the facing direction D1 at an angle larger than or equal to 80° and smaller than or equal to 100°. The winding axis 02 more desirably intersects with the facing direction D1 at an angle larger than or equal to 85° and smaller than or equal to 95°. The winding axis 02 optimally intersects with the facing direction D1 at an angle of 90°.

For example, when the power receiving coil 22 is sectioned by the unit length from one end of the power receiving coil 22 in the longitudinal direction to the other end of the power receiving coil 22 in the longitudinal direction, the winding axis 02 of the power receiving coil 22 is formed by drawing a line that passes through the curvature center point of each unit length of the power receiving coil 22 or near the curvature center point of each unit length. A method of deriving the winding axis 02 that is an imaginary line from the curvature center point of each unit length of the power receiving coil 22 includes various approximation methods, such as linear approximation, logarithmic approximation and polynomial approximation.

Referring back to FIG. 3, the power receiving unit 200 (power receiving device 11) in the present embodiment is arranged such that the winding axis 02 extends along the longitudinal direction of the vehicle body 70 (also see FIG. 5). When the winding axis 02 is extended linearly, the extended line passes through the front peripheral portion 34F and the rear peripheral portion 34B. The power receiving coil 22 of the power receiving unit 200 has a center portion P2.

The center portion P2 is an imaginary point that is located in the winding axis 02 of the power receiving coil 22, and is located at the center portion of the power receiving coil 22 in the direction in which the winding axis 02 extends. The center portion P2 is located at the center of the power receiving coil 22 in the longitudinal direction when the power receiving unit 200 is viewed in plan along the vertical direction. In other words, the center portion P2 is located just at the center between one endmost portion of the coil wires of the power receiving coil 22 in the direction in which the winding axis 02 extends (one direction) and the other endmost portion of the coil wires of the power receiving coil 22 in the direction in which the winding axis 02 extends (the other direction opposite to the one direction). The power receiving unit 200 is located on a side in the vehicle rearward direction B with respect to the center portion P1 (position close to the rear peripheral portion 34B). Among the front peripheral portion 34F, the rear peripheral portion 34B, the right peripheral portion 34R and the left peripheral portion 34L, the center portion P2 of the power receiving coil 22 is arranged at a position closest to the rear peripheral portion 34B.

In a power transfer system according to the present embodiment (see a power transfer system 1000 in FIG. 6 and FIG. 7), the winding axis 02 of the power receiving coil 22 is arranged parallel to the winding axis O1 of the power transmitting coil 58 when the electromotive vehicle 10 is parked in the parking space 52 by using the lines 52T (see FIG. 5), or the like, as a mark. When electric power is transferred between the power receiving unit 200 and the power transmitting unit 56, the power receiving device 11 (power receiving unit 200) moved downward by the drive mechanism 30 (see FIG. 2) faces the power transmitting device 50 (power transmitting unit 56) in the vertical direction.

The power transfer system 1000 will be described. FIG. 6 is a view that schematically shows the power transfer system 1000 according to the embodiment. FIG. 7 is a view that shows the details of the circuit configuration of the power transfer system 1000. As shown in FIG. 6 and FIG. 7, the power transfer system 1000 includes the external power supply device 61 and the electromotive vehicle 10.

The external power supply device 61 will be described. The external power supply device 61 includes a communication unit 230, a power transmitting ECU 55, the high-frequency power supply device 64, a display unit 242 (see FIG. 7) and a fee reception unit 246 (see FIG. 7) in addition to the above-described power transmitting device 50 (power transmitting unit 56, and the like).

The power transmitting unit 56 includes the power transmitting coil 58 and the capacitor 59. FIG. 7 does not show the coil unit 60 (ferrite core 57) for the sake of convenience. The power transmitting coil 58 is electrically connected to the capacitor 59 and the high-frequency power supply device 64. The high-frequency power supply device 64 is connected to an alternating-current power supply 64E. The alternating-current power supply 64E may be a commercial power supply or an independent power supply.

In the example shown in FIG. 7, the power transmitting coil 58 and the capacitor 59 are connected in series with each other. The power transmitting coil 58 and the capacitor 59 may be connected in parallel with each other. The power transmitting coil 58 has a stray capacitance. An electric circuit (LC resonant circuit) is formed of the inductance of the power transmitting coil 58, the stray capacitance of the power transmitting coil 58 and the capacitance of the capacitor 59. The capacitor 59 is not an indispensable component and may be used as needed.

The power transmitting coil 58 contactlessly transmits electric power to the power receiving coil 22 of the power receiving unit 200 through electromagnetic induction. The number of turns of the power transmitting coil 58 and a distance from the power transmitting coil 58 to the power receiving coil 22 are set as needed on the basis of the distance between the power transmitting coil 58 and the power receiving coil 22, the frequency of each of the power transmitting coil 58 and the power receiving coil 22, and the like, such that the coupling coefficient $\kappa$ that indicates the degree of coupling between the power transmitting coil 58 and the power receiving coil 22, and the like, become appropriate values.

The power transmitting ECU 55 includes a CPU, a storage device and an input/output buffer. The power transmitting ECU 55 receives signals from sensors, or the like, outputs control signals to the devices, and controls the devices in the external power supply device 61. These controls are not only limited to processing by software but may also be processed by exclusive hardware (electronic circuit).

The power transmitting ECU 55 executes drive control over the high-frequency power supply device 64. The high-frequency power supply device 64 is controlled by a control signal MOD (see FIG. 7) from the power transmitting ECU 55, and converts electric power, received from the alternating-current power supply 64E, to high-frequency electric power. The high-frequency power supply device 64 supplies the converted high-frequency electric power to the power transmitting coil 58.

The communication unit 230 is a communication interface for carrying out wireless communication between the external power supply device 61 and the electromotive vehicle 10 (communication unit 160). The communication unit 230 receives battery information INFO and a signal STRT or signal STP for instructions to start or stop formation of a test magnetic field (or a test electric field) and to start or stop transmission of full-scale electric power, transmitted from the communication unit 160, and outputs these pieces of information to the power transmitting ECU 55.

Cash, a prepaid card, a credit card, or the like, is inserted into the fee reception unit 246 in advance of charging. The display unit 242 shows a charging electric power unit price, or the like, to a user. The display unit 242 may have a function as an input unit, such as a touch panel, and is able to accept user's input for whether to approve the charging electric power unit price. The power transmitting ECU 55 causes the high-frequency power supply device 64 to start full-scale charging when the charging electric power unit price is approved. When charging has been completed, a fee is paid at the fee reception unit 246.

In the power transfer system 1000 according to the present embodiment, in advance of full-scale power supply from the external power supply device 61 to the electromotive vehicle 10, the electromotive vehicle 10 is guided toward the external power supply device 61, and the position of the power receiving device 11 is aligned to the position of the power transmitting device 50.

For position alignment, initially, in the first step, a positional relationship between the power receiving device 11 and the power transmitting device 50 is detected on the basis of an image that is captured by the camera 120, and the electromotive vehicle 10 is controlled to travel such that the electromotive vehicle 10 is guided toward the power transmitting device 50 on the basis of the detected result. An image including the plurality of light emitting portions 231 (see FIG. 5) is captured by the camera 120, and the positions and orientations of the plurality of light emitting portions 231 are recognized from the image. The positions and orientations of the power transmitting device 50 and electromotive vehicle 10 are recognized on the basis of the result of the image recognition, and the electromotive vehicle 10 is guided toward the power transmitting device 50 on the basis of the recognized result.

A facing area of the power receiving device 11 and the power transmitting device 50 is smaller than the area of the bottom face 76 (see FIG. 3) of the vehicle body 70. The power transmitting device 50 is placed under the electromotive vehicle 10. After the camera 120 cannot capture the power transmitting device 50 (light emitting portions 231) any more (or after the camera 120 does not capture the power transmitting device 50 (light emitting portions 231) any more), position alignment control shifts from the first step to the second step.

In the second step, the power transmitting ECU 55 causes the high-frequency power supply device 64 to transmit a test signal by using a small electric power. The power transmitting device 50 forms a test magnetic field (or a test electric field) upon reception of the small electric power. The small electric power is an electric power smaller than a charging electric power for charging the battery after authentication or an electric power that is transmitted at the time of position alignment, and may include an electric power that is transmitted intermittently. The test magnetic field (or the test electric field) is formed around the power transmitting device 50 by the small electric power.

The magnitude of electric power that is transmitted from the power transmitting device 50 as the test signal in order to form the test magnetic field in the second step is smaller than the magnitude of electric power that is supplied from the power transmitting device 50 to the power receiving device 11 for charging after completion of the position alignment between the power transmitting device 50 and the power receiving device 11. The reason why the power transmitting device 50 forms a test magnetic field in the second step is to measure a relative position between the power transmitting device 50 and the electromotive vehicle 10 (power receiving device 11) by detecting a distance between the power transmitting device 50 and the power receiving unit 200, and large electric power for full-scale power feeding is not required.

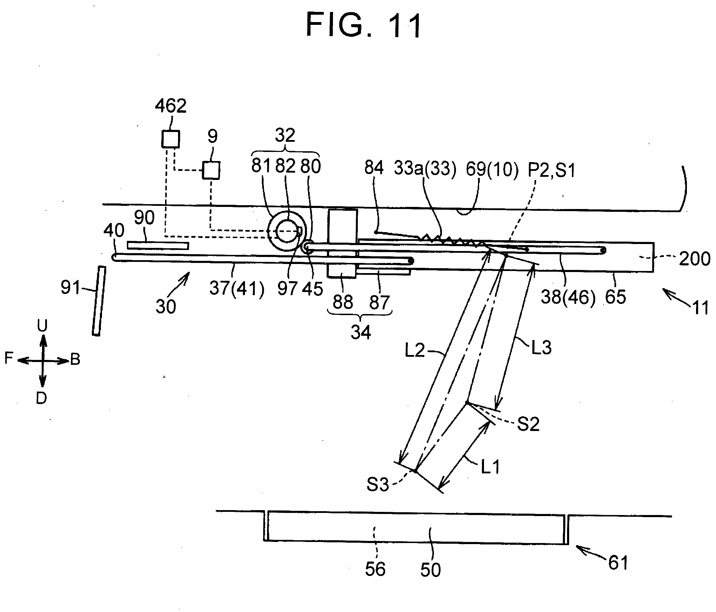

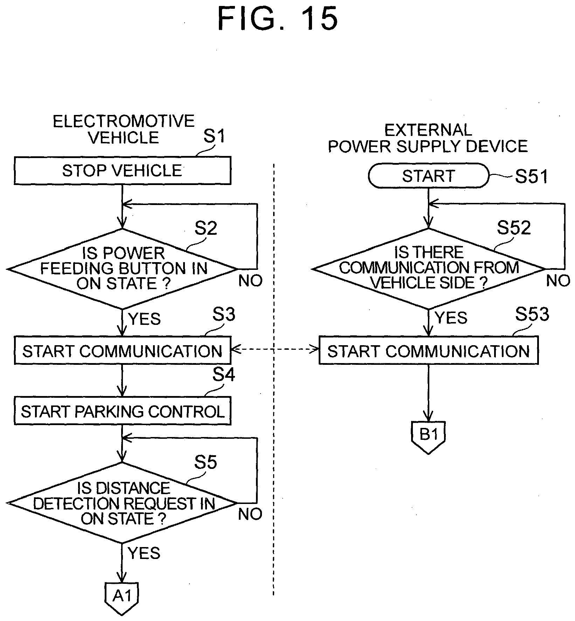

A magnetic field strength of the test magnetic field is detected by the power receiving unit 200 provided at the bottom face 76 of the electromotive vehicle 10. When the power receiving unit 200 detects the magnetic field strength of the test magnetic field, the power receiving unit 200 is arranged at the detection position S2 (described in detail later with reference to FIG. 11 to FIG. 13) by the drive mechanism 30. The distance between the power transmitting device 50 and the power receiving device 11 is detected on the basis of the magnetic field strength detected with the use of the power receiving unit 200. On the basis of information about the distance, the electromotive vehicle 10 is further guided toward the power transmitting device 50, and the position of the power receiving device 11 is aligned to the position of the power transmitting device 50 (a detailed flow will be described later with reference to FIG. 15 to FIG. 20).

The electromotive vehicle 10 will be described. As mainly shown in FIG. 7, the electromotive vehicle 10 includes the power receiving device 11, the drive mechanism 30, an adjuster 9, the rectifier 13, a relay 146, a resistance load 392, a power receiving voltage measuring unit (voltage sensor 190T), the battery 150, a charger (DC/DC converter 142) for charging the battery 150, system main relays SMR1, SMR2, a step-up converter 162, inverters 164, 166, motor generators 172, 174, the engine 176, a power split device 177, the wheels 19F, 19B, a controller 180, a power feeding button 122, the camera 120, a display unit 142D and the communication unit 160.

As described above, the power receiving unit 200 of the power receiving device 11 is supported by the drive mechanism 30. When the drive mechanism 30 is driven, the power receiving unit 200 is movable up and down. Through upward or downward movement, the power receiving unit 200 is configured to be movable among the retracted position S1, the detection position S2 and the power receiving position S3 (described in detail later with reference to FIG. 9, and the like). The power receiving unit 200 of the power receiving device 11 contactlessly receives electric power from the power transmitting device 50 in a state where the electromotive vehicle 10 is stopped at a predetermined position in the parking space 52 (see FIG. 6) and the power receiving unit 200 is arranged at the power receiving position S3 so as to face the power transmitting device 50.

The adjuster 9 adjusts the amount of electric power that is supplied from the battery 150 to the drive mechanism 30 (motor 82 (see FIG. 9) (described later)). The controller 180 transmits a control signal AG to the adjuster 9, and executes drive control over the drive mechanism 30 via the adjuster 9. The controller 180 is able to move the power receiving unit 200 from the retracted position S1 to the detection position S2, move the power receiving unit 200 from the detection position S2 to the power receiving position S3 or move the power receiving unit 200 from the power receiving position S3 to the retracted position S1 by transmitting the control signal AG to the adjuster 9.

The relay 146 and the resistance load 392 are connected in series with each other, and are provided between the rectifier 13 and the DC/DC converter 142. As will be described later, the relay 146 is controlled to a conductive state by the controller 180 (a control signal SE3 from the controller 180) at the time when the vehicle position is aligned in advance of contactless power feeding of the electromotive vehicle 10.

The power receiving unit 200 of the power receiving device 11 includes the power receiving coil 22 and the capacitor 23. FIG. 7 does not show the coil unit 24 (ferrite core 21) for the sake of convenience. The power receiving coil 22 is connected to the capacitor 23 and the rectifier 13. In the example shown in FIG. 7, the power receiving coil 22 and the capacitor 23 are connected in series with each other. The power receiving coil 22 and the capacitor 23 may be connected in parallel with each other.

The power receiving coil 22 has a stray capacitance. An electric circuit (LC resonant circuit) is formed of the inductance of the power receiving coil 22, the stray capacitance of the power receiving coil 22 and the capacitance of the capacitor 23. The capacitor 23 is not an indispensable component and may be used as needed.

The rectifier 13 is connected to the power receiving device 11, converts alternating current, supplied from the power receiving device 11, to direct current, and supplies the direct current to the DC/DC converter 142. The battery 150 is connected to the DC/DC converter 142. The DC/DC converter 142 adjusts the voltage of direct current supplied from the rectifier 13, and supplies the direct current to the battery 150.

For example, a diode bridge and a smoothing capacitor (both are not shown) are included as the rectifier 13. A so-called switching regulator that carries out rectification through switching control may also be used as the rectifier 13. The rectifier 13 may be included in the power receiving unit 200, and the rectifier 13 is more desirably a static rectifier, such as a diode bridge, in order to prevent, for example, erroneous operation of switching elements due to an electromagnetic field generated.

The electromotive vehicle 10 is equipped with the engine 176 and the motor generator 174 as a power source. The engine 176 and the motor generators 172, 174 are coupled to the power split device 177. The electromotive vehicle 10 is propelled by driving force that is generated by at least one of the engine 176 and the motor generator 174. Power generated by the engine 176 is split by the power split device 177 into two paths. One of the two paths transmits power to the wheels 19F, 19B, and the other one of the two paths transmits power to the motor generator 172.

The motor generator 172 is an alternating-current rotary electric machine, and is, for example, formed of a three-phase alternating-current synchronous motor in which a permanent magnet is embedded in a rotor. The motor generator 172 generates electric power with kinetic energy of the engine 176, which is split by the power split device 177. For example, when the state of charge (also referred to as "SOC") of the battery 150 is lower than a predetermined value, the engine 176 starts up, and the motor generator 172 generates electric power. Thus, the battery 150 is charged.

The motor generator 174 is also an alternating-current rotating electrical machine, and is, for example, formed of a three-phase alternating-current synchronous motor in which a permanent magnet is embedded in a rotor, as in the case of the motor generator 172. The motor generator 174 generates driving force by using at least one of electric power stored in the battery 150 and electric power generated by the motor generator 172. The driving force of the motor generator 174 is transmitted to the wheels 19F, 19B.

During braking operation of the electromotive vehicle 10 or during reduction in acceleration on a downhill, mechanical energy stored as kinetic energy or potential energy in the electromotive vehicle 10 is used to rotationally drive the motor generator 174 via the wheels 19F, 19B, and the motor generator 174 operates as a generator. The motor generator 174 operates as a regenerative brake, and generates braking force by converting running energy to electric power. The electric power generated by the motor generator 174 is stored in the battery 150.

A planetary gear that includes a sun gear, pinion gears, a carrier and a ring gear may be used as the power split device 177. The pinion gears are in mesh with the sun gear and the ring gear. The carrier supports the pinion gears such that the pinion gears are rotatable, and is coupled to a crankshaft of the engine 176. The sun gear is coupled to the rotary shaft of the motor generator 172. The ring gear is coupled to the rotary shaft of the motor generator 174 and the wheels 19F, 19B.

The battery 150 is an electric power storage element that is configured to be chargeable and dischargeable. The battery 150 is, for example, formed of a secondary battery, such as a lithium ion battery, a nickel-metal hydride battery and a lead-acid battery, or an electrical storage element, such as an electric double layer capacitor. The battery 150 stores not only electric power that is supplied from the DC/DC converter 142 but also regenerative electric power that is generated by the motor generator 172 or the motor generator 174. The battery 150 supplies the stored electric power to the step-up converter 162.

A large-capacitance capacitor may be used as the battery 150. The battery 150 may be any device as long as the device is an electric power buffer that is able to temporarily store electric power supplied from the external power supply device 61 and/or regenerative electric power from the motor generator 172 or the motor generator 174 and to supply the stored electric power to the step-up converter 162.

A voltage sensor and a current sensor (both are not shown) are provided for the battery 150. The voltage sensor is used to detect a voltage VB of the battery 150. The current sensor is used to detect a current IB input to or output from the battery 150. These detected values are output to the controller 180. The controller 180 computes the state of charge (SOC) of the battery 150 on the basis of the voltage VB and the current IB.

The system main relay SMR1 is arranged between the battery 150 and the step-up converter 162. The system main relay SMR1 electrically connects the battery 150 to the step-up converter 162 when a signal SE1 from the controller 180 is activated. The system main relay SMR1 breaks an electrical path between the battery 150 and the step-up converter 162 when the signal SE1 from the controller 180 is deactivated. The step-up converter 162, for example, includes a direct-current chopper circuit. The step-up converter 162 is controlled on the basis of a signal PWC from the controller 180. The step-up converter 162 steps up voltage that is applied between a power line PL1 and a power line NL, and outputs the voltage between a power line PL2 and the power line NL.

Each of the inverters 164, 166, for example, includes a three-phase bridge circuit. The inverters 164, 166 are respectively provided in correspondence with the motor generators 172, 174. The inverter 164 drives the motor generator 172 on the basis of a signal PW1 from the controller 180. The inverter 166 drives the motor generator 174 on the basis of a signal PWI2 from the controller 180.

The rectifier 13 rectifies alternating-current power extracted by the power receiving coil 22. On the basis of a signal PWD from the controller 180, the DC/DC converter 142 converts electric power rectified by the rectifier 13 to electric power having the voltage level of the battery 150 and then outputs the converted electric power to the battery 150. The DC/DC converter 142 is not an indispensable component and may be used as needed. When the DC/DC converter 142 is not used, a matching transformer may be provided between the power transmitting device 50 and high-frequency power supply device 64 of the external power supply device 61. The matching transformer may be substituted for the DC/DC converter 142 by matching impedance.

The system main relay SMR2 is arranged between the DC/DC converter 142 and the battery 150. The system main relay SMR2 electrically connects the battery 150 to the DC/DC converter 142 when a control signal SE2 from the controller 180 is activated; whereas the system main relay SMR2 breaks an electrical path between the battery 150 and the DC/DC converter 142 when the control signal SE2 is deactivated.

The controller 180 generates the signals PWC, PWI1, PWI2 for respectively driving the step-up converter 162 and the motor generators 172, 174 on the basis of an accelerator operation amount, a vehicle speed and signals from other various sensors. The controller 180 outputs the generated signals PWC, PWI1, PWI2 to the step-up converter 162 and the inverters 164, 166, respectively. While the electromotive vehicle 10 is traveling, the controller 180 activates the signal SE1 to turn on the system main relay SMR1, and deactivates the signal SE2 to turn off the system main relay SMR2.

In advance of power feeding from the external power supply device 61 to the electromotive vehicle 10, the controller 180 receives a charging start signal TRG via the power feeding button 122 through user's operation, or the like. The controller 180 outputs the signal STRT for instructions to start formation of a test magnetic field (or a test electric field) to the external power supply device 61 via the communication unit 160 on the basis of the fact that a predetermined condition is satisfied.

The display unit 142D of the electromotive vehicle 10, for example, indicates a determination result as to whether the power transmitting unit 56 of the external power supply device 61 is compatible with the power receiving unit 200 of the electromotive vehicle 10 after the controller 180 communicates with the external power supply device 61. When it is determined that the power transmitting unit 56 is compatible with the power receiving unit 200 and user's approval, or the like, is input, the communication unit 160 and the communication unit 230 further wirelessly communicate with each other, and exchange information therebetween for aligning the position of the power receiving device 11 to the position of the power transmitting device 50.

The controller 180 receives an image, captured by the camera 120, from the camera 120. The controller 180 receives information about electric power (voltage and current) that is transmitted from the external power supply device 61, via the communication unit 160. The controller 180 executes parking control over the electromotive vehicle 10 through a method (described later) in order to guide the electromotive vehicle 10 toward the power transmitting device 50 on the basis of the data from the camera 120.

After parking control that uses the camera 120, the controller 180 executes drive control over the drive mechanism 30 via the adjuster 9 by transmitting the control signal AG to the adjuster 9 in order to detect the magnetic field strength of the test magnetic field (or the electric field strength of the test electric field) with the use of the power receiving unit 200. The power receiving unit 200 is arranged at the detection position S2.

The timing at which the power receiving unit 200 is arranged at the detection position S2 may be timing after parking control that uses the camera 120, may be timing during parking control that uses the camera 120 or may be timing before parking control that uses the camera 120. The controller 180 turns off the system main relay SMR2 by transmitting the control signal SE2 to the system main relay SMR2 (see FIG. 7), and turns on the relay 146 by transmitting the control signal SE3 to the relay 146 (see FIG. 7).

The voltage sensor 190T is provided between a pair of power lines that connect the rectifier 13 to the battery 150. By temporarily turning on the relay 146, the resistance load 392 is connected to the voltage sensor 190T. The voltage sensor 190T measures a voltage between both ends of the resistance load 392. The result measured by the voltage sensor 190T is transmitted from the voltage sensor 190T to the controller 180 as a magnetic field strength Ht (or electric field strength) detected by the power receiving unit 200 arranged at the detection position S2.

The controller 180 is able to obtain information about the magnetic field strength Ht of the test magnetic field (or the electric field strength of the test electric field) via the voltage sensor 190T. A request to form the test magnetic field (request to transmit small electric power) for obtaining the information is transmitted from the electromotive vehicle 10 to the external power supply device 61 via the communication units 160, 230. The controller 180 executes parking control over the electromotive vehicle 10 through a method (described later) so as to guide the electromotive vehicle 10 toward the power transmitting device 50 of the external power supply device 61 on the basis of the data from the voltage sensor 190T.

When parking control over the electromotive vehicle 10 toward the power transmitting device 50 is completed, the controller 180 transmits a power feeding command to the external power supply device 61 via the communication unit 160, and turns on the system main relay SMR2 by activating the control signal SE2. The controller 180 generates the signal PWD for driving the DC/DC converter 142, and then outputs the generated signal PWD to the DC/DC converter 142.

When parking control over the electromotive vehicle 10 toward the power transmitting device 50 is completed, the controller 180 controls the adjuster 9 by outputting the control signal AG. The adjuster 9 drives the drive mechanism 30 on the basis of the control signal AG to move the power receiving unit 200 of the power receiving device 11. The power receiving unit 200 is arranged at the power receiving position S3. In a state where the power receiving unit 200 and the power transmitting unit 56 face each other, full-scale electric power is transferred therebetween.

While the electromotive vehicle 10 is being charged through contactless power feeding, the voltage sensor 190T detects a voltage input to the DC/DC converter 142 as a detected value (voltage VR). The voltage sensor 190T detects the voltage VR between the rectifier 13 and the DC/DC converter 142, and outputs the detected value to the controller 180.

The voltage sensor 190T detects a secondary-side direct-current voltage of the rectifier 13, that is, a received voltage received from the power transmitting device 50, and then outputs the detected value (voltage VR) to the controller 180. The controller 180 determines a power receiving efficiency on the basis of the voltage VR, and transmits information about the power receiving efficiency to the external power supply device 61 via the communication unit 160. The controller 180 outputs the signal STP for instructions to stop transmission of electric power via the communication unit 160 to the external power supply device 61 on the basis of the fact that the battery 150 is fully charged, user's operation, or the like.

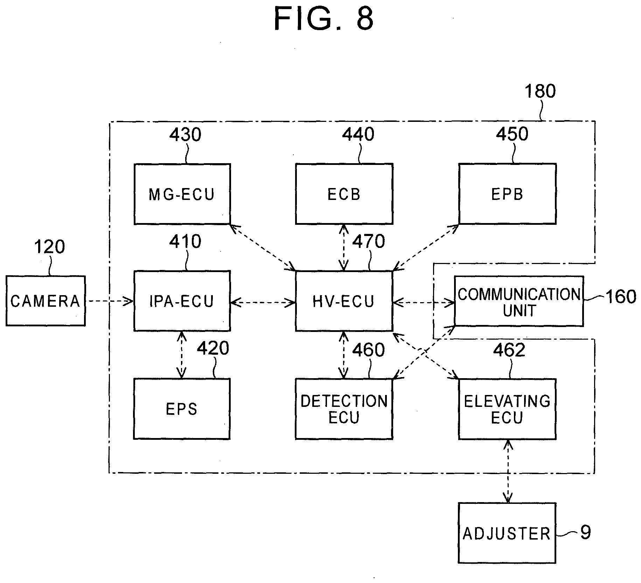

The controller 180 will be described. FIG. 8 is a functional block diagram of the controller 180 shown in FIG. 7. The controller 180 includes an intelligent parking assist (IPA)-electronic control unit (ECU) 410, an electric power steering (EPS) 420, a motor-generator (MG)-ECU 430, an electrically controlled brake (ECB) 440, an electric parking brake (EPB) 450, a detection ECU 460, an elevating ECU 462 and a hybrid (HV)-ECU 470.

When an operation mode of the vehicle is a charging mode, the IPA-ECU 410 executes guiding control (first guiding control) for guiding the vehicle toward the power transmitting device 50 of the external power supply device 61 on the basis of image information received from the camera 120. The IPA-ECU 410 recognizes the power transmitting device 50 on the basis of the image information received from the camera 120. The IPA-ECU 410 recognizes a positional relationship (substantial distance and orientation) between the electromotive vehicle 10 and the power transmitting device 50 on the basis of the image including the plurality of light emitting portions 231, captured by the camera 120. The IPA-ECU 410 outputs a command to the EPS 420 such that the electromotive vehicle 10 is guided toward the power transmitting device 50 in an appropriate direction on the basis of the recognized result.

The IPA-ECU 410 provides notification about completion of guiding control based on the image information from the camera 120 (first guiding control) to the HV-ECU 470 when the power transmitting device 50 is placed under the vehicle body as a result of an approach of the electromotive vehicle 10 to the power transmitting device 50 and, as a result, the camera 120 does not capture the power transmitting device 50 any more. The EPS 420 executes automatic control over a steering wheel on the basis of a command from the IPA-ECU 410 during first guiding control.

After completion of guiding control based on the image information from the camera 120 (first guiding control), the elevating ECU 462 controls the adjuster 9, and arranges the power receiving device 11 (power receiving unit 200) at the detection position S2 with the use of the drive mechanism 30. As described above, the timing at which the power receiving unit 200 is arranged at the detection position S2 may be timing before first guiding control, may be timing after first guiding control or may be timing during first guiding control.

The MG-ECU 430 that serves as a vehicle drive unit controls the motor generators 172, 174 and the step-up converter 162 on the basis of a command from the HV-ECU 470. The MG-ECU 430 generates signals for respectively driving the motor generators 172, 174 and the step-up converter 162, and then respectively outputs the generated signals to the inverters 164, 166 and the step-up converter 162.

The ECB 440 executes braking control over the electromotive vehicle 10 on the basis of a signal from the HV-ECU 470. The ECB 440 controls a hydraulic brake and executes coordination control between the hydraulic brake and the regenerative brake made by the motor generator 174, on the basis of a command from the HV-ECU 470. The EPB 450 controls an electric parking brake on the basis of a command from the HV-ECU 470.

The detection ECU 460 receives information about electric power transmitted from the external power supply device 61, from the external power supply device 61 via the communication units 160, 230. The detection ECU 460 receives information about the magnetic field strength Ht of the test magnetic field from the voltage sensor 190T. The detection ECU 460 calculates a distance between the power transmitting device 50 and the electromotive vehicle 10 by, for example, comparing the transmitted voltage from the external power supply device 61 with a voltage calculated from the information about the magnetic field strength Ht. The detection ECU 460 executes second guiding control for guiding the electromotive vehicle 10 on the basis of the detected distance.

The HV-ECU 470 that serves as a controller moves the electromotive vehicle 10 by controlling the MG-ECU 430 that drives the vehicle on the basis of any one of the results of first and second guiding controls. The power receiving device 11 including the power receiving unit 200, the MG-ECU 430 that serves as the vehicle drive unit and the HV-ECU 470 that serves as the controller can function as a parking assist system.

The HV-ECU 470 executes the process for stopping movement of the electromotive vehicle 10 when the magnetic field strength Ht detected by the voltage sensor 190T (power receiving unit 200) does not satisfy a predetermined power receivable condition even when the MG-ECU 430 moves the vehicle beyond a predetermined distance after the IPA-ECU 410 does not detect the power transmitting device 50 any more. This process may be a process of automatically performing the brake or may be a process of instructing a driver to depress the brake.

The HV-ECU 470 interrupts guiding by using the detection ECU 460 (second guiding control) by stopping detection of the magnetic field strength with the use of the voltage sensor 190T (power receiving unit 200) when the magnetic field strength Ht detected by the voltage sensor 190T (power receiving unit 200) does not satisfy the predetermined power receivable condition even when the MG-ECU 430 moves the vehicle beyond the predetermined distance after the IPA-ECU 410 does not detect the position of the power transmitting device 50 any more.

The HV-ECU 470 completes guiding by using the detection ECU 460 (second guiding control) and starts preparation for charging of the in-vehicle battery 150 from the power transmitting device 50 when the magnetic field strength Ht detected by the voltage sensor 190T (power receiving unit 200) satisfies the predetermined power receivable condition during movement of the vehicle by the predetermined distance after the IPA-ECU 410 does not detect the position of the power transmitting device 50 any more. The elevating ECU 462 controls the adjuster 9, and causes the power receiving device 11 (power receiving unit 200) to be arranged at the power receiving position S3 with the use of the drive mechanism 30.

Preferably, after the HV-ECU 470 interrupts guiding of the detection ECU 460 by automatically stopping the electromotive vehicle 10, the HV-ECU 470 may start transmission or reception of electric power with the use of the power receiving device 11 in response to driver's instruction (for example, setting operation to a parking area) after a parking position is changed by the driver, may start charging the in-vehicle battery 150 from the power transmitting device 50 when the electric power received by the power receiving device 11 from the power transmitting device 50 satisfies the power receivable condition, and may alarm the driver when the electric power received by the power receiving device 11 from the power transmitting device 50 does not satisfy the power receivable condition.

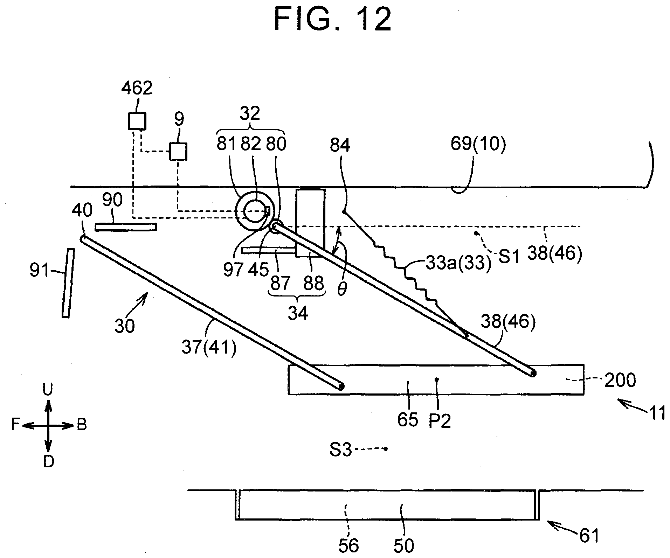

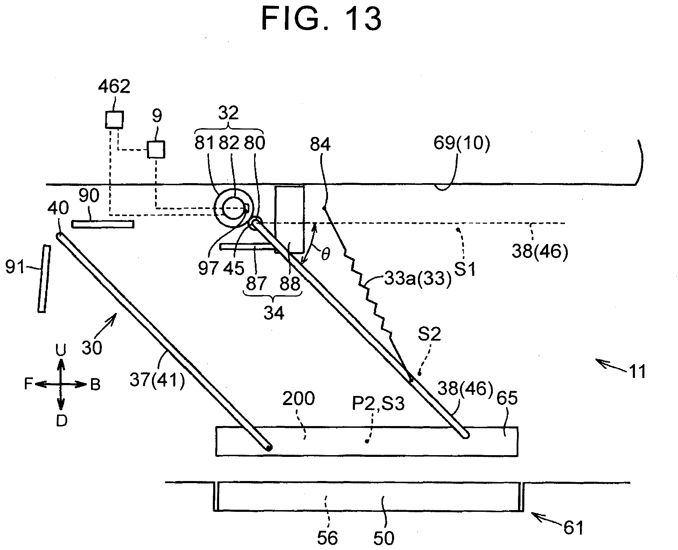

Next, the drive mechanism 30 will be described. FIG. 9 is a perspective view that shows the power receiving unit 200 and the drive mechanism 30. The power receiving device 11 includes the power receiving unit 200 and the drive mechanism 30. The drive mechanism 30 is able to move the power receiving unit 200 toward the power transmitting unit 56. In other words, the drive mechanism 30 is able to move the power receiving unit 200 from the retracted position S1 (see FIG. 11) to the detection position S2 (see FIG. 11 and FIG. 12), move the power receiving unit 200 from the detection position S2 to the power receiving position S3 (see FIG. 11 and FIG. 13) and move the power receiving unit 200 from the retracted position S1 to the power receiving position S3.

The drive mechanism 30 is also able to move the power receiving unit 200 away from the power transmitting unit 56. In other words, the drive mechanism 30 is able to move the power receiving unit 200 from the power receiving position S3 (see FIG. 11 and FIG. 13) to the retracted position S1 (see FIG. 11), move the power receiving unit 200 from the detection position S2 (see FIG. 11 and FIG. 12) to the retracted position S1 and move the power receiving unit 200 from the power receiving position S3 (see FIG. 11 and FIG. 13) to the detection position S2.

In the present embodiment, the drive mechanism 30 constitutes a so-called parallel linkage, and the power receiving unit 200 is able to move obliquely downward by pivoting while keeping its horizontal position or move obliquely upward by pivoting while keeping its horizontal position. In the present embodiment, the detection position S2 and the power receiving position S3 are located obliquely downward with respect to the vertical direction when viewed from the retracted position S1. The power receiving position S3 is located obliquely downward with respect to the vertical direction when viewed from the detection position S2.

The power receiving unit 200 indicated by the dashed line at the upper right side in FIG. 9 shows a state at the time when the power receiving unit 200 is retracted in the vehicle body 70 of the electromotive vehicle 10 and the power receiving unit 200 is arranged at the retracted position S1. The fact that the power receiving unit 200 is arranged at the retracted position S1 means that power receiving unit 200 is arranged such that a reference point in the power receiving unit 200 is included in the retracted position S1 that is a position (imaginary point) in a space (in other words, a reference point in the power receiving unit 200 overlaps with the retracted position S1).

A reference point in the power receiving unit 200 is, for example, the center portion P2 (see FIG. 3) of the power receiving coil 22. As described above, the center portion P2 is an imaginary point located in the winding axis 02 of the power receiving coil 22 and is located at the center portion of the power receiving coil 22 in the direction in which the winding axis 02 extends. The center portion P2 is located at the center of the power receiving coil 22 in the longitudinal direction when the power receiving unit 200 is viewed in plan along the vertical direction.

The power receiving unit 200 indicated by the continuous line located at the center lower portion in FIG. 9 indicates a state where the power receiving unit 200 is moved downward from the vehicle body 70 of the electromotive vehicle 10 and the power receiving unit 200 is arranged at the detection position S2. The fact that the power receiving unit 200 is arranged at the detection position S2 means that the power receiving unit 200 is arranged such that the above-described reference point in the power receiving unit 200 is included in the detection position S2 that is a position (imaginary point) in the space (in other words, the above-described reference point in the power receiving unit 200 overlaps with the detection position S2).

The retracted position S1, the detection position S2 and the power receiving position S3 at which the power receiving unit 200 is arranged are mutually different positions, and may be respectively any positions in the space. In the present embodiment, the detection position S2 is located farther from the bottom face 76 (see FIG. 2 and FIG. 3) of the vehicle body 70 than the retracted position S1. The power receiving position S3 is located farther from the bottom face 76 (see FIG. 2 and FIG. 3) of the vehicle body 70 than the retracted position S1 and the detection position S2.

The drive mechanism 30 includes a link mechanism 31 (a support member 37 and a support member 38), a drive unit 32, an urging member 33 (an elastic member 33a and an elastic member 33b), a retaining device 34, stoppers 35 and a switching unit 36. The urging member 33 includes the elastic member 33a and the elastic member 33b. The link mechanism 31 includes the support member 37 and the support member 38. The support member 37 and the support member 38 are arranged at an interval from each other in the direction in which the winding axis 02 extends, and constitute a so-called parallel linkage together with the casing 65.

The support member 37 includes a rotary shaft 40, a leg 41 and a leg 42. The rotary shaft 40 is rotatably supported by the floor panel 69 (see FIG. 3), or the like. The leg 41 is connected to one end of the rotary shaft 40. The lower end of the leg 41 is rotatably connected to the side face wall 75 of the casing 65. The leg 42 is connected to the other end of the rotary shaft 40. The lower end of the leg 42 is rotatably connected to the side face wall 74 of the casing 65.

The support member 38 includes a rotary shaft 45, a leg 46 and a leg 47. The rotary shaft 45 is rotatably supported by the floor panel 69 (see FIG. 3), or the like. The leg 46 is connected to one end of the rotary shaft 45. The lower end of the leg 46 is rotatably connected to the side face wall 75 of the casing 65. The leg 47 is connected to the other end of the rotary shaft 45. The lower end of the leg 47 is rotatably connected to the side face wall 74 of the casing 65.

The drive unit 32 includes a gear 80, a gear 81 and the motor 82. The gear 80 is provided at the end of the rotary shaft 45. The gear 81 is in mesh with the gear 80. The motor 82 rotates the gear 81. The motor 82 includes a rotor 95, a stator 96 provided around the rotor 95, and an encoder 97 that detects the rotation angle of the rotor 95. The rotor 95 is connected to the gear 81.

When electric power is supplied to the motor 82, the rotor 95 rotates. The gear 81 rotates, and the gear 80 that is in mesh with the gear 81 also rotates. The gear 80 is fixed to the rotary shaft 45, and rotates integrally with the rotary shaft 45. When the rotary shaft 45 rotates, the power receiving unit 200 and the casing 65 move up and down. The driving force of the motor 82 is transmitted to the power receiving unit 200 and the casing 65. Depending on the rotation direction of the motor 82, the power receiving unit 200 and the casing 65 move upward or downward.

The elastic member 33a is connected to the leg 46 and the floor panel 69 (see FIG. 3). An end 83 of the elastic member 33a is rotatably connected to the leg 46, and is located on the lower end side of the leg 46 with respect to the center portion of the leg 46. An end 84 of the elastic member 33a is rotatably connected to the floor panel 69, and is located on a side across the connecting portion between the leg 46 and the rotary shaft 45 from the support member 37.

The elastic member 33b is connected to the leg 47 and the floor panel 69 (see FIG. 3). An end 85 of the elastic member 33b is rotatably connected to the leg 47, and is located on a lower end side of the leg 47 with respect to the center portion of the leg 47. An end 86 of the elastic member 33b is rotatably connected to the floor panel 69, and is located on a side across the connecting portion between the leg 47 and the rotary shaft 45 from the support member 37.

Referring to the power receiving unit 200 indicated by the dashed line located at the upper right side in FIG. 9, when the power receiving unit 200 is arranged at the retracted position S1 (when the power receiving unit 200 is arranged so as to include the retracted position S1), the elastic members 33a, 33b each have a natural length and form a so-called natural state (no-load state).

Referring to the power receiving unit 200 indicated by the continuous line located at the center lower portion in FIG. 9, when the power receiving unit 200 is arranged at the detection position S2 (when the power receiving unit 200 is arranged so as to include the detection position S2), the elastic members 33a, 33b each have a length larger than the natural length and form an extended state. Tensile force acts on the elastic members 33a, 33b. Due to the tensile force, urging force for moving the casing 65 in a direction in which the power receiving unit 200 returns to the retracted position S1 acts on the casing 65 that accommodates the power receiving unit 200. Such urging force also acts on the casing 65 that accommodates the power receiving unit 200 when the power receiving unit 200 is arranged at the power receiving position S3.

The retaining device 34 includes a device body 88 and a support member 87. The device body 88 is fixed to the floor panel 69 (see FIG. 3), or the like. The support member 87 is retained by the device body 88, and the amount of projection by which the support member 87 projects from the device body 88 is adjusted. As described above, the power receiving unit 200 and the casing 65 that are indicated by the dashed line in FIG. 9 are located so as to include the retracted position S1, and show the power receiving unit 200 and the casing 65 in a state before the power receiving unit 200 moves downward toward the power transmitting unit 56 (retracted state).

The support member 87 supports the bottom face (lid) of the casing 65 in the retracted state, and fixes the casing 65, accommodating the power receiving unit 200, inside a predetermined storage place provided in the vehicle body 70. For this fixation, the support member 87 may be inserted in a hole that is formed in the end face wall 73 of the casing 65. The support member 87 is subjected to drive control that is executed by the elevating ECU 462 shown in FIG. 8.

The pair of stoppers 35 each include stopper pieces 90, 91 that restrict the rotation angle of a corresponding one of the legs 41, 42, and define the moving range of the casing 65 that accommodates the power receiving unit 200. The stopper pieces 90 respectively contact the legs 41, 42 to suppress contact of the casing 65, accommodating the power receiving unit 200, with the floor panel 69, or the like, of the electromotive vehicle 10. The stopper pieces 91 respectively contact the legs 41, 42 to suppress contact of the casing 65, accommodating the power receiving unit 200, with a member, or the like, placed on the ground surface.

The switching unit 36 includes a gear 92 fixed to the rotary shaft 45 and a stopper 93 that engages with the gear 92. The stopper 93 is subjected to drive control that is executed by the elevating ECU 462 shown in FIG. 8. Through the above control, the stopper 93 engages with the gear 92 or disengages from the gear 92. When the stopper 93 engages with the gear 92, rotation of the rotary shaft 45 in a direction in which the power receiving unit 200 moves downward is restricted (restricted state). In the restricted state, the power receiving unit 200 is permitted to move away from the power transmitting unit 56, and the power receiving unit 200 is restricted (prevented) from approaching the power transmitting unit 56.

When the stopper 93 disengages from the gear 92, rotation of the rotary shaft 45 in a direction in which the power receiving unit 200 moves upward and rotation of the rotary shaft 45 in a direction in which the power receiving unit 200 moves downward are permitted (permitted state). In the permitted state, the power receiving unit 200 is permitted to move away from the power transmitting unit 56, and the power receiving unit 200 is permitted to approach the power transmitting unit 56.

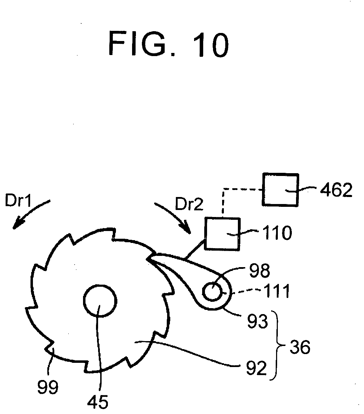

FIG. 10 is a side view that schematically shows the switching unit 36, and shows a state when the switching unit 36 is viewed in the arrow A direction in FIG. 9. The switching unit 36 includes the gear 92 fixed to the rotary shaft 45, the stopper 93 that selectively engages with a plurality of teeth 99 provided in the gear 92, and a drive unit 110. The stopper 93 is rotatably provided on a shaft portion 98. A torsion bar spring 111 is provided in the shaft portion 98. The stopper 93 receives the urging force of the torsion bar spring 111. the distal end of the stopper 93 is pressed against the peripheral surface of the gear 92.

The drive unit 110 rotates the stopper 93 together with the shaft portion 98. The drive unit 110 rotates the stopper 93 against the urging force of the torsion bar spring 111 such that the distal end of the stopper 93 separates from the peripheral surface of the gear 92. The drive unit 110 is controlled by the controller 180 (elevating ECU 462), and switches between a state where the distal end of the stopper 93 is engaged with the tooth 99 and a state where the distal end of the stopper 93 separates from the gear 92 and the stopper 93 is disengaged from the gear 92.

A rotation direction Dr1 is a direction in which the rotary shaft 45 and the gear 92 rotate at the time when the casing 65 accommodating the power receiving unit 200 moves upward. A rotation direction Dr2 is a direction in which the rotary shaft 45 and the gear 92 rotate at the time when the casing 65 accommodating the power receiving unit 200 moves downward. When the stopper 93 is engaged with the gear 92, rotation of the gear 92 in the rotation direction Dr2 is restricted. Even in a state where the stopper 93 and the gear 92 are engaged with each other, the gear 92 is allowed to rotate in the rotation direction Dr1.

As described above with reference to FIG. 7, the adjuster 9 adjusts the amount of electric power that is supplied from the battery 150 to the motor 82 (see FIG. 9) of the drive mechanism 30. The controller 180 transmits the control signal AG (see FIG. 7) to the adjuster 9, and executes drive control over the drive mechanism 30 via the adjuster 9.

The operation at the time when the power receiving unit 200 of the power receiving device 11 receives electric power from the power transmitting unit 56 will be described. At the time when the power receiving unit 200 receives electric power from the power transmitting unit 56, the electromotive vehicle 10 is stopped (parked) at a predetermined position through parking assist with the use of the camera 120 and the power receiving unit 200.

The positional relationship among the retracted position S1, the detection position S2 and the power receiving position S3 will be described. FIG. 11 is a side view that shows the power receiving unit 200, the casing 65 and the drive mechanism 30 when the electromotive vehicle 10 is stopped at the predetermined position. FIG. 11 shows a state where the power receiving unit 200 is arranged at the retracted position S1.

The casing 65 is supported by the retaining device 34 in a state where the casing 65 is located in proximity to the floor panel 69. The casing 65 is fixed at the retracted position, and the power receiving unit 200 is located so as to include the retracted position S1. The urging member 33 in this state has a natural length, and the urging member 33 does not apply tensile force to the casing 65 accommodating the power receiving unit 200.

As described above, when the power receiving unit 200 is arranged at the detection position S2, the power receiving unit 200 is able to detect the strength of a magnetic field or electric field that is formed by the power transmitting unit 56 of the external power supply device 61 (see FIG. 5) at a place at which the power receiving unit 200 is located. When the power receiving unit 200 is arranged at the power receiving position S3, the power receiving unit 200 is able to contactlessly receive electric power through a magnetic field or electric field that is formed by the power transmitting unit 56 of the external power supply device 61 (see FIG. 5). The detection position S2 and the power receiving position S3 are located obliquely downward with respect to the vertical direction when viewed from the retracted position S1. The power receiving position S3 is located obliquely downward with respect to the vertical direction when viewed from the detection position S2.

In the present embodiment, a distance L1 between the power receiving position S3 and the detection position S2 is shorter than a distance L2 between the power receiving position S3 and the retracted position S1. In the present embodiment, in the vertical direction as well, a distance between the power receiving position S3 and the detection position S2 is shorter than a distance between the power receiving position S3 and the retracted position S1.

Preferably, as shown in FIG. 11, the distance L1 between the detection position S2 and the power receiving position S3 is shorter than a distance L3 between the detection position S2 and the retracted position S1. Preferably, in the vertical direction as well, a distance between the detection position S2 and the power receiving position S3 is shorter than the distance between the detection position S2 and the retracted position S1.

At the time when the power receiving unit 200 detects the magnetic field strength of the test magnetic field from the power transmitting unit 56 of the power transmitting device 50, the elevating ECU 462 drives the retaining device 34 to withdraw the support member 87 from the lower face of the casing 65. The elevating ECU 462 turns on the adjuster 9 such that electric power is supplied from the battery 150 to the motor 82.

As shown in FIG. 12, when electric power is supplied to the motor 82, the leg 46 of the support member 38 rotates about the rotary shaft 45 by power from the motor 82. The power receiving unit 200 and the casing 65 move obliquely downward toward the vertically downward direction D and further toward the vehicle forward direction F. The support member 37 follows movement of the support member 38, the power receiving unit 200 and the casing 65, and rotates about the rotary shaft 40.

The urging member 33 extends with movement of the power receiving unit 200 and the casing 65, and the urging member 33 applies tensile force to the casing 65. The casing 65 is urged by the urging member 33 in the direction in which the power receiving unit 200 returns to the retracted position S1. The motor 82 moves the casing 65 downward against the tensile force. The encoder 97 transmits the rotation angle of the rotor 95 provided in the motor 82 to the elevating ECU 462. The elevating ECU 462 acquires the position of the casing 65 and the position of the power receiving unit 200 on the basis of information from the encoder 97.

When the elevating ECU 462 determines that the rotation angle of the rotor 95 has reached a value at which the power receiving unit 200 includes the detection position S2, the elevating ECU 462 engages the stopper 93 with the gear 92 by driving the drive unit 110 (see FIG. 10). Rotation of the gear 92 and the rotary shaft 45 stops, and downward movement of the power receiving unit 200 also stops. A rotation angle $\theta$ at this time is, for example, 30°. The tensile force of the urging member 33 is smaller than driving force from the motor 82. Upward movement of the power receiving unit 200 and the casing 65 is suppressed by a stop of the motor 82, and movement of the power receiving unit 200 and the casing 65 is stopped.

The motor 82 is driven in a direction in which the power receiving unit 200 and the casing 65 are moved downward, while the stopper 93 is engaged with the gear 92. Movement of the power receiving unit 200 and the casing 65 is stopped, and the driving force of the motor 82 is larger than the tensile force of the urging member 33, so the power receiving unit 200 and the casing 65 are kept in a stopped state. The power receiving unit 200 is allowed to detect the magnetic field strength of the test magnetic field from the power transmitting unit 56 of the power transmitting device 50 in a state where the power receiving unit 200 is arranged at the detection position S2 (in other words, in a state shown in FIG. 12).

The detection position S2 should be set to an optimal position depending on the type of electromotive vehicle 10 and the type of external power supply device 61. For example, the type (information about level, shape, driving power, driving frequency, and the like) of external power supply device 61 is transmitted from the external power supply device 61 to the electromotive vehicle 10 (elevating ECU 462) via the communication units 160, 230, and the position of the detection position S2 is determined on the basis of the transmitted information. In a state where the power receiving unit 200 is arranged at the detection position S2, the magnetic field strength of the test magnetic field is detected with the use of the power receiving unit 200. The distance between the power transmitting device 50 and the power receiving device 11 is detected on the basis of the magnetic field strength detected with the use of the power receiving unit 200. On the basis of information about the distance, the electromotive vehicle 10 is further guided toward the power transmitting device 50, and the position of the power receiving device 11 is aligned to the position of the power transmitting device 50. When the position alignment is completed, the elevating ECU 462 drives the drive unit 110, and releases the engaged state between the stopper 93 and the gear 92.

FIG. 13 is a side view that shows a state where the power receiving unit 200 contactlessly receives electric power from the power transmitting unit 56. After the magnetic field strength of the test magnetic field is detected with the use of the power receiving unit 200, and position alignment between the power transmitting device 50 and the power receiving device 11 is completed on the basis of the detected information, the elevating ECU 462 moves the power receiving unit 200 downward from the detection position S2 to the power receiving position S3. The elevating ECU 462 turns on the adjuster 9 such that electric power is supplied from the battery 150 to the motor 82.

When electric power is supplied to the motor 82, the leg 46 of the support member 38 rotates about the rotary shaft 45 by power from the motor 82. The power receiving unit 200 and the casing 65 move downward toward the vertically downward direction D and further toward the vehicle forward direction F. The support member 37 follows movement of the support member 38, the power receiving unit 200 and the casing 65, and rotates about the rotary shaft 40.

The urging member 33 extends with movement of the power receiving unit 200 and the casing 65, and the urging member 33 applies tensile force to the casing 65. The casing 65 is urged by the urging member 33 in the direction in which the power receiving unit 200 returns to the retracted position S1. The motor 82 moves the casing 65 downward against the tensile force. The encoder 97 transmits the rotation angle of the rotor 95 provided in the motor 82 to the elevating ECU 462. The elevating ECU 462 acquires the position of the casing 65 and the position of the power receiving unit 200 on the basis of information from the encoder 97.

When the elevating ECU 462 determines that the rotation angle of the rotor 95 has reached a value at which the power receiving unit 200 faces the power transmitting unit 56 (the power receiving unit 200 is located so as to include the power receiving position S3), the elevating ECU 462 engages the stopper 93 with the gear 92 by driving the drive unit 110 (see FIG. 10). Rotation of the gear 92 and the rotary shaft 45 stops, and downward movement of the power receiving unit 200 also stops. The rotation angle θ at this time is, for example, 45°. The tensile force of the urging member 33 is smaller than driving force from the motor 82. Upward movement of the power receiving unit 200 and the casing 65 is suppressed by a stop of the motor 82, and movement of the power receiving unit 200 and the casing 65 is stopped.

The motor 82 is driven in a direction in which the power receiving unit 200 and the casing 65 are moved downward, while the stopper 93 is engaged with the gear 92. Movement of the power receiving unit 200 and the casing 65 is stopped, and the driving force of the motor 82 is larger than the tensile force of the urging member 33, so the power receiving unit 200 and the casing 65 are kept in a stopped state. The power receiving unit 200 is allowed to contactlessly receive electric power from the power transmitting unit 56 of the power transmitting device 50 in a state where the power receiving unit 200 is arranged at the power receiving position S3 (in other words, in a state shown in FIG. 13).

The power receiving unit 200 and the power transmitting unit 56 face each other at a predetermined interval. In this state, electric power is contactlessly transferred from the power transmitting unit 56 to the power receiving unit 200. The principle of power transfer that is carried out between the power receiving unit 200 and the power transmitting unit 56 will be described later. When power transfer between the power receiving unit 200 and the power transmitting unit 56 is completed, the elevating ECU 462 drives the drive unit 110, and releases the engaged state between the stopper 93 and the gear 92. The elevating ECU 462 executes drive control over the adjuster 9 such that the casing 65 accommodating the power receiving unit 200 moves upward.

At this time, the adjuster 9 stops supplying current to the motor 82. When driving force from the motor 82 is not applied to the casing 65, the casing 65 accommodating the power receiving unit 200 is moved upward by tensile force from the urging member 33. Even in a state where the stopper 93 is engaged with the gear 92, the gear 92 is permitted to rotate in the rotation direction Dr1 (see FIG. 10).

When the elevating ECU 462 determines that the casing 65 and the power receiving unit 200 have returned to the retracted position (retracted position S1) on the basis of the rotation angle of the rotor 95, detected by the encoder 97, the elevating ECU 462 controls the adjuster 9 so as to stop driving the motor 82. When the elevating ECU 462 drives the retaining device 34, the support member 87 fixes the casing 65. The power receiving unit 200 is kept in a state where the power receiving unit 200 is located at the retracted position S1.

When the power receiving unit 200 and the casing 65 return to the retracted position S1 (initial position), the length of each of the elastic members 33a, 33b returns to the natural length. If the power receiving unit 200 and the casing 65 are further moved upward from the initial position, the elastic members 33a, 33b are extended more than those in a state where the power receiving unit 200 and the casing 65 are located at the initial position, and the elastic members 33a, 33b apply tensile force to the power receiving unit 200 and the casing 65 such that the power receiving unit 200 and the casing 65 return to the initial position. The power receiving unit 200 and the casing 65 are appropriately returned to the predetermined retracted position. At the time when the power receiving unit 200 and the casing 65 are moved upward, the power receiving unit 200 and the casing 65 may be moved upward not only by the tensile force of the urging member 33 but also by driving the motor 82.

In the process of moving the power receiving unit 200 and the casing 65 downward, it is assumed that the motor 82 may not be driven appropriately. In this case, the power receiving unit 200 and the casing 65 move upward by the tensile force of the urging member 33. It is possible to prevent the power receiving unit 200 and the casing 65 from being kept lowered.

The casing 65 and the power receiving unit 200 may be prevented by a foreign substance, such as a curb, from moving from the retracted position (retracted position S1) shown in FIG. 11 to power receiving positions (the detection position S2 and the power receiving position S3) shown in FIG. 12 and FIG. 13. The power receiving position S3 is a position at the time when the power receiving unit 200 receives electric power from the power transmitting unit 56. At this time, when the elevating ECU 462 detects that the adjuster 9 is in an on state and the rotation angle of the rotor 95 does not change over a predetermined period, the elevating ECU 462 controls the adjuster 9 such that the power receiving unit 200 and the casing 65 move upward.

The adjuster 9 supplies electric power to the motor 82 such that the rotor 95 rotates in the direction in which the power receiving unit 200 and the casing 65 move upward. It is possible to prevent a situation that driving force that is applied from the drive unit 32 to the power receiving unit 200 is larger than or equal to a predetermined value, and it is possible to prevent damage to the casing 65 due to pressing of the casing 65 against a foreign substance. The fact that "driving force that is applied from the drive unit 32 to the power receiving unit 200 is the predetermined value" is set as needed on the basis of, for example, the strength of the casing 65 and the power receiving unit 200.

In the above-described example, the case where the elastic members 33a, 33b are in a natural state when the power receiving unit 200 and the casing 65 are in the retracted state is described. Instead, the elastic members 33a, 33b may be set in a state extended from the natural state at the timing of the retracted state. In this case as well, the length of each of the elastic members 33a, 33b is shortest at the time when the power receiving unit 200 and the casing 65 are located in the retracted state.

When the power receiving unit 200 and the casing 65 move downward, tensile force that is applied from the elastic members 33a, 33b to the power receiving unit 200 and the casing 65 sequentially increases. It is possible to pull the power receiving unit 200 and the casing 65 to return to the retracted state with this tensile force after completion of reception of electric power. When the power receiving unit 200 and the casing 65 are located in the retracted state as well, tensile force is applied to the power receiving unit 200 and the casing 65. Thus, the power receiving unit 200 and the casing 65 are hard to deviate from the retracted position.

Referring back to FIG. 12, when the power transmitting unit 56 is forming the test magnetic field, a magnetic flux flows along the winding axis of the power transmitting coil 58, and passes through the ferrite core of the power receiving unit 200 so as to flow along the winding axis of the power receiving coil 22. Although not shown in the drawing, the test magnetic field (or the test electric field) that is formed by the power transmitting unit 56 also reaches a portion (detection position S2) at which the power receiving unit 200 is arranged.

Assuming that the power receiving unit 200 detects the magnetic field strength of the test magnetic field (the electric field strength of the test electric field) while the power receiving unit 200 is arranged at the retracted position S1. In comparison with this case, in the present embodiment, the power receiving unit 200 detects the magnetic field strength of the test magnetic field (the electric field strength of the test electric field) in a state where the power receiving unit 200 is arranged at the detection position S2.

The situation of the magnetic field that is detected by the power receiving unit 200 at the detection position S2 is close to the situation of the magnetic field that is received by the power receiving unit 200 at the time when the power receiving unit 200 is actually arranged at the power receiving position S3, as compared to the situation of the magnetic field that is detected by the power receiving unit 200 at the retracted position S1. With the configuration of the present embodiment, it is possible to acquire the relative positional relationship between the power receiving device 11 and the power transmitting device 50 with further high accuracy, and it is possible to align the position of the power receiving device 11 to the position of the power transmitting device 50 with high accuracy as compared to the case of the above-described assumed configuration.

Particularly, in the present embodiment, the power receiving position S3 is located obliquely downward with respect to the vertical direction when viewed from the retracted position S1. Before and after the power receiving unit 200 is moved upward or downward, the position of the power receiving unit 200 is displaced in the vehicle rearward direction B or the vehicle forward direction F. Even when the power receiving unit 200 detects the magnetic field strength of the test magnetic field (or the electric field strength of the test electric field) while the power receiving unit 200 is arranged at the retracted position S1 and then the position of the power receiving unit 200 is aligned to the position of the power transmitting device 50 of the vehicle body 70 on the basis of the detected result, it is conceivable that a positional deviation tends to occur when the power receiving unit 200 moves from the retracted position S1 to the power receiving position S3.

The power receiving unit 200 detects the strength of the test magnetic field (or the test electric field) that is formed at the detection position S2 by the power transmitting device 50. The position of the power receiving device 11 is aligned to the position of the power transmitting device 50 in prospect of a moving distance before and after upward or downward movement of the power receiving unit 200. Thus, the electromotive vehicle 10 and the power transmitting device 50 are allowed to be arranged at mutually appropriate positions. Thus, with the power receiving device 11 and the power transfer system 1000 according to the present embodiment, it is possible to efficiently contactlessly charge the battery 150 mounted on the vehicle body 70.

In addition to the configuration of the present embodiment, a search coil for aligning the position of the power receiving device 11 to the position of the power transmitting device 50 may be further provided on the vehicle body 70 in addition to the power receiving unit 200. It is possible to carry out position alignment with further high accuracy. When no search coil is used, it is possible to reduce manufacturing cost.

According to the present embodiment, the power receiving unit 200 has been already moved downward to the detection position S2 at the timing at which position alignment between the power receiving device 11 and the power transmitting device 50 is completed. When the power receiving unit 200 moves from the detection position S2 to the power receiving position S3, the power receiving unit 200 is able to immediately shift into the full-scale charging mode.

Assuming that the power receiving unit 200 detects the magnetic field strength of the test magnetic field (the electric field strength of the test electric field) in a state where the power receiving unit 200 is arranged at the power receiving position S3. In this case, the power receiving device 11 easily contacts a foreign substance, such as a curb, at the time when the electromotive vehicle 10 is guided. In the present embodiment, the detection position S2 is located upward in the vertical direction with respect to the power receiving position S3. It is possible to suppress contact of the power receiving device 11 with a foreign substance, such as a curb, at the time when the electromotive vehicle 10 is guided.

Referring back to FIG. 2 and FIG. 3, the exhaust muffler 67E (see FIG. 2), the fuel tank 67T (see FIG. 3), the exhaust pipe, and the like, are provided on the floor panel 69 of the vehicle body 70 as the mounted devices of the vehicle body 70. Preferably, in a state where the power receiving unit 200 is arranged at the detection position S2, the level of the power receiving unit 200 in the vertical direction should be lower than the level of these mounted devices in the vertical direction. When the power receiving unit 200 is arranged at the detection position S2, a portion located at the uppermost in the vertical direction among all the members, such as the capacitor 23 and the coil unit 24, that constitute the power receiving unit 200 should be located below a portion located at the lowermost in the vertical direction among all the mounted devices.

With the above configuration, at the time when the power receiving unit 200 arranged at the detection position S2 detects the strength of the test magnetic field, influence of the presence of the mounted devices on the test magnetic field that reaches the power receiving unit 200 is suppressed, so it is possible to carry out position alignment with further high accuracy.

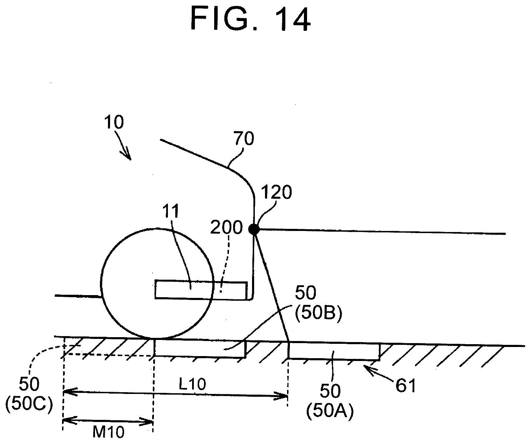

FIG. 14 is a view for illustrating a state at the time when parking is guided with the use of the camera 120 (first guiding control). When the power transmitting device 50 is present at a position 50A when viewed from the vehicle body 70, the power transmitting device 50 is in the field of vision of the camera 120, so it is possible to carry out parking assist with the use of the camera 120.

Depending on the configuration of the drive mechanism 30 (not shown) (in other words, depending on the position of the power receiving position S3), the electromotive vehicle 10 is required to move such that the power transmitting device 50 is present at a position 50B when viewed from the vehicle body 70. An area around the position 50B tends to be a blind area of the camera 120 depending on the arrangement position of the camera 120, and it may be difficult to carry out parking assist that utilizes an image captured by the camera 120.

As described above, in the present embodiment, not only guiding of parking with the use of the camera 120 (first guiding control) but also parking assist that uses the test magnetic field (or the test electric field) formed by the power transmitting device 50 and the power receiving unit 200 that detects the test magnetic field (or the test electric field) (second guiding control) is carried out. Even after the power transmitting device 50 is placed under the vehicle body 70 as indicated by the position 50B, it is possible to accurately specify a parking position.

If the power receiving unit 200 is not able to appropriately detect the test magnetic field even when the electromotive vehicle 10 is moved such that the power transmitting device 50 exceeds an assumed range to such a degree as indicated by a position 50C, the electromotive vehicle 10 is controlled to stop. For example, if no position at which the power receiving unit 200 is able to appropriately detect the test magnetic field is found even when the electromotive vehicle 10 is moved by a distance L10 (for example, 1.5 m) after part of the power transmitting device 50 enters the blind area of the camera 120, a driver is alarmed so as to stop the electromotive vehicle 10 or the vehicle is automatically stopped. The distance L10 is determined on the basis of a margin M10 of position alignment accuracy by the power receiving device 11.

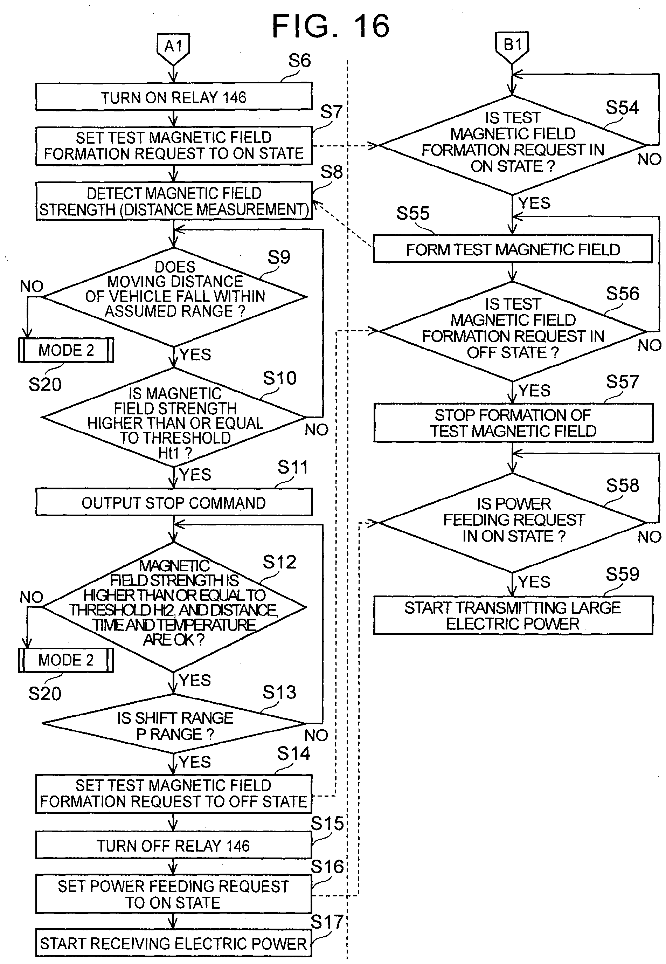

A parking assist flowchart will be described. FIG. 15 is a flowchart (first half) for illustrating control that is executed in the step of aligning the position of the electromotive vehicle 10 at the time when contactless power feeding is carried out. FIG. 16 is a flowchart (second half) for illustrating control that is executed in the step of aligning the position of the electromotive vehicle 10 at the time when contactless power feeding is carried out. In FIG. 15 and FIG. 16, the left-side half shows control that is executed at the electromotive vehicle side, and the right-side half shows control that is executed at the external power supply device 61 side.

As shown in FIG. 15, initially, a stop process is executed in step S1 at the vehicle side, and subsequently it is detected in step S2 whether the power feeding button 122 has been set to the on state. When the power feeding button has not been set to the on state, the controller 180 waits until the power feeding button is set to the on state. When it has been detected in step S2 that the power feeding button 122 has been set to the on state, the process proceeds to step S3. In step S3, the controller 180 starts communicating with the external power supply device 61 with the use of the communication units 160, 230.

At the external power supply device 61 side, when the process is started in step S51, the process waits in step S52 until communication is carried out from the vehicle side, and starts communicating in step S53 when start of communication is required.

At the vehicle side, subsequent to the process of starting communication in step S3, parking control is started in step S4. In the first step, parking control uses the intelligent parking assist (IPA) system that uses the camera. When the vehicle gets somewhat close to a power feeding position, a distance detection request is set to an on state inside the controller 180 (YES in step S5).

As shown in FIG. 16, at the external power supply device 61 side, subsequent to step S53, the process waits for an on state of a test magnetic field formation request in step S54. At the vehicle side, the process proceeds from step S5 to step S6, and the controller 180 sets the relay 146 to the on state. The controller 180 transmits the fact that the test magnetic field formation request is set to the on state, to the power supply device side in step S7.

The external power supply device 61 detects in step S54 that the test magnetic field formation request is set to the on state, proceeds with the process to step S55, and forms the test magnetic field. Electric power that is used to form the test magnetic field may be an electric power as in the case where electric power is transmitted after start of charging; however, the electric power is desirably set to a signal (small electric power) that is weaker than a signal that is transmitted at the time of transmission of full-scale electric power. The fact that the vehicle has reached the power feedable distance is detected on the condition that the magnetic field strength that is detected by the power receiving unit 200 with the use of the test magnetic field has reached a set value.

For the test magnetic field that is formed by a constant primary-side voltage (output voltage from the external power supply device 61), the magnetic field strength that is detected with the use of the power receiving unit 200 varies with the distance L between the power transmitting device 50 and the power receiving unit 200. A map, or the like, may be generated by, for example, measuring the correlation between the primary-side voltage and the magnetic field strength that is detected by the power receiving unit 200 in advance, and the distance between the power transmitting device 50 and the power receiving unit 200 may be detected on the basis of the magnetic field strength that is detected by the power receiving unit 200.

A primary-side current (output current from the external power supply device 61) also varies with the distance L between the power transmitting device 50 and the power receiving unit 200 (power receiving device 11). The distance between the power transmitting device 50 and the power receiving unit 200 (power receiving device 11) may be detected on the basis of the magnetic field strength of the test magnetic field from the external power supply device 61 by using the above correlation.

When the detection ECU 460 detects the distance between the power transmitting device 50 and the power receiving unit 200, the detection ECU 460 outputs the distance information to the HV-ECU 470. When the detection ECU 460 receives a charging start command from the HV-ECU 470, the detection ECU 460 turns on the system main relay SMR2 by activating the signal SE2 that is output to the system main relay SMR2. The detection ECU 460 generates a signal for driving the DC/DC converter 142, and outputs the signal to the DC/DC converter 142.

When the operation mode of the vehicle is a running mode, the HV-ECU 470 outputs control commands to the MG-ECU 430 and the ECB 440 on the basis of an operating situation of an accelerator pedal/brake pedal, a traveling situation of the vehicle, and the like. When activation of a parking brake is instructed by the driver through, for example, operation of a parking brake switch, the HV-ECU 470 outputs an operation command to the EPB 450.

On the other hand, when the operation mode of the vehicle is a charging mode, the HV-ECU 470 establishes communication with the external power supply device 61 with the use of the communication unit 160, and outputs a start-up command for starting up the external power supply device 61 to the external power supply device 61 via the communication unit 160. When the external power supply device 61 starts up, the HV-ECU 470 outputs a lighting command for lighting the light emitting portions 231 provided on the power transmitting device 50 of the external power supply device 61, to the external power supply device 61 via the communication unit 160.

When the light emitting portions 231 light up, the HV-ECU 470 outputs a guiding control operating signal, indicating that guiding control for guiding the electromotive vehicle 10 toward the power transmitting device 50 is being executed, to the external power supply device 61 via the communication unit 160, and outputs a command for instructions to execute guiding control based on the image information from the camera 120 (first guiding control), to the IPA-ECU 410.

When the HV-ECU 470 receives notification about completion of the first guiding control from the IPA-ECU 410, the HV-ECU 470 executes guiding control based on the distance information between the power transmitting device 50 and the power receiving unit 200 (second guiding control). Specifically, the elevating ECU 462 controls the adjuster 9, and arranges the power receiving device 11 (power receiving unit 200) at the detection position S2 with the use of the drive mechanism 30. The HV-ECU 470 receives the distance information between the power transmitting device 50 of the external power supply device 61 and the power receiving unit 200 (power receiving device 11) of the vehicle from the detection ECU 460, and outputs commands to the MG-ECU 430 and the ECB 440 that respectively execute drive control and braking control over the vehicle on the basis of the distance information such that the distance between the power transmitting device 50 and the power receiving device 11, moved downward to the power receiving position S3, becomes minimum.

Determination as to whether parking is completed is carried out in step S9 and step S10 in FIG. 16. In step S9, it is determined whether the moving distance of the vehicle falls within the assumed range. The moving distance of the vehicle here is calculated by the product of a vehicle speed and an elapsed time. When the moving distance of the vehicle exceeds the assumed range in step S9, the process proceeds to step S20 (operation mode 2). As described with reference to FIG. 14, the assumed range may be set to, for example, 1.5 m after the power transmitting device 50 enters the blind area of the camera 120. Because the accuracy of a vehicle speed sensor is not high at a low speed, so it is desirable to select a threshold based on which it is determined whether the moving distance falls within the assumed range in prospect of a detection error of the vehicle speed sensor.

When the moving distance of the vehicle does not exceed the assumed range in step S9, the process proceeds to step S10, and it is determined whether the magnetic field strength of the test magnetic field, detected by the power receiving unit 200, is higher than or equal to a threshold Ht1.

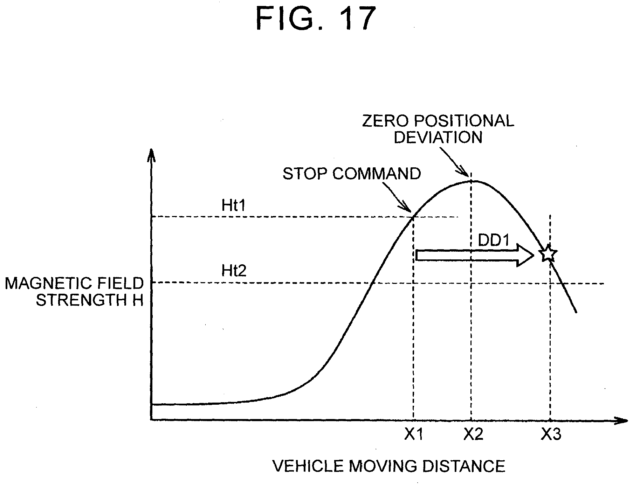

FIG. 17 is a view that shows the correlation between the vehicle moving distance and the magnetic field strength of the test magnetic field, detected by the power receiving unit 200. While the vehicle moving distance is approaching a position at which a positional deviation is zero, the magnetic field strength H increases. The magnetic field strength H starts decreasing after passage of the position at which the positional deviation is zero. The threshold Ht1 is a determination threshold at which a stop command is output to the vehicle, and is determined by measuring the correlation between the distance and the voltage in advance. On the other hand, the threshold Ht2 in FIG. 17 is a threshold that is determined on the basis of an allowable leakage electromagnetic field strength at the time when electric power is transmitted or received at the maximum power, and is lower than the threshold Ht1.

Referring back to FIG. 16, when the magnetic field strength is not higher than or equal to the threshold Ht1 in step S10, the process proceeds to step S9. The controller 180 repeats determination as to whether the position of the power receiving coil moved downward to the power receiving position S3 is placed at a power receivable position with respect to the position of the power transmitting coil, and determines the distance and direction in which the vehicle is moved such that the power receiving coil is placed at the power receivable position with respect to the power transmitting coil.

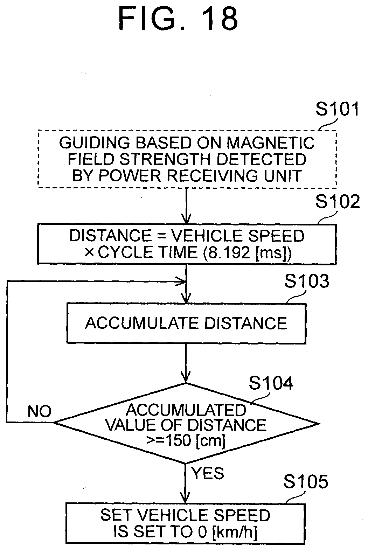

Calculation of the moving distance of the vehicle in step S9 will be described in detail with reference to FIG. 18. FIG. 18 is a flowchart for illustrating detection of the moving distance of the vehicle in step S9 of FIG. 16. When guiding based on the magnetic field strength detected by the power receiving unit 200 is started in step S101, calculation of an increase in the distance is set by the product of a vehicle speed and a cycle time (for example, 8.192 ms) as shown in step S102 in addition to detection of the position with the use of the power receiving unit 200. The vehicle speed is detected by the vehicle speed sensor.

The distance is accumulated in step S103, and it is determined in step S104 whether the accumulated value of the distance is longer than or equal to a threshold (for example, 150 cm). When the accumulated value has not reached the threshold yet in step S104, the process returns to step S103, and accumulation of the distance is continued again. At this time, parking that is carried out by parking assist is continued. When the accumulated value of the distance has been longer than or equal to 150 cm in step S104, a set vehicle speed is set to 0 (km/h) in order to prevent an overrun as described in FIG. 14.

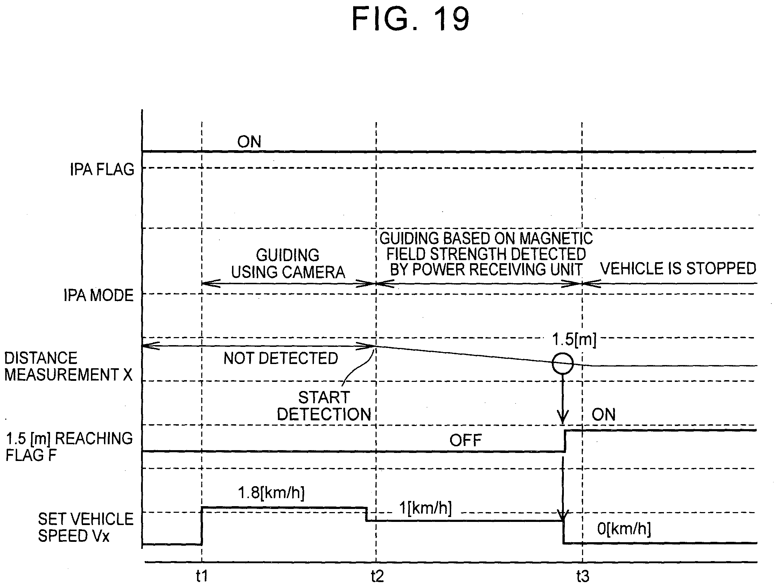

FIG. 19 is an operation waveform chart that shows an example of operation by which the vehicle speed is set to zero through the flowchart of FIG. 18. At time t1, an IPA flag is set to an on state, and the set vehicle speed is set to 1.8 km/h. The IPA flag is set to the on state when the driver selects an intelligent parking assist mode. Between time t1 and time t2, the IPA mode (parking assist mode) is a guiding mode that uses the camera 120.

When the power transmitting device 50 enters the blind area of the camera 120 at time t2, the IPA mode is changed to a guiding mode that uses the power receiving unit 200 at time t2. When the distance becomes the threshold 1.5 m in step S103 and step S104 of FIG. 18, a flag F is changed from an off state to an on state at time t3, the set vehicle speed is set to 0 km/h accordingly, and the vehicle is stopped.

Referring back to FIG. 16, when the magnetic field strength detected by the power receiving unit 200 is higher than or equal to the threshold Ht1 in step S10, the controller 180 outputs a stop command in step S11. The stop command may be a command to prompt the driver to stop the vehicle by depressing a brake pedal or may be the process of automatically applying a brake.

As indicated by the arrow DD1 in FIG. 17, the vehicle may move after issuance of the stop command. Therefore, when the magnetic field strength detected by the power receiving unit 200 after the stop is higher than or equal to the threshold Ht2, the moving distance of the vehicle falls within the assumed range, the elapsed time is not excessive and the temperature is appropriate for carrying out charging in step S12, the process proceeds to step S13. When any one of the conditions is not satisfied in step S12, the process proceeds to step S20 (operation mode 2).

In step S13, it is determined whether a shift range has shifted to a P range. When the shift range is not the P range in step S13, the process of step S12 is executed until the shift range is shifted to the P range, and a positional deviation of the vehicle is continued to be monitored. When the shift range has shifted to the P range, the process proceeds to step S14. Here, the parking position is fixed, it is determined that parking is completed, and the controller 180 of the vehicle sets the test magnetic field formation request to an off state. That is, transmission of small electric power (test signal) for forming the test magnetic field is stopped in response to the fact that the shift range has been changed to the P range.

At the external power supply device 61 side, when setting of test magnetic field formation request to the off state is received through communication, it is detected in step S56 that the test signal transmission request has changed to the off state, and transmission of the test signal is stopped in step S57. In the external power supply device 61, subsequently in step S58, it is detected whether the power feeding request changes to an on state.

At the vehicle side, after the test signal transmission request is set to the off state in step S14, the process proceeds to step S15. In step S15, the relay 146 is controlled from the on state to the off state. After that, the HV-ECU 470 outputs the power feeding command for instructions to feed power from the external power supply device 61, to the external power supply device 61 via the communication unit 160, and outputs the charging start command to the detection ECU 460.

In step S16, the HV-ECU 470 provides the fact that the power feeding request is set to the on state toward the external power supply device 61 through communication. At the external power supply device 61 side, it is detected in step S58 that the power feeding request is set to the on state, and power feeding at a high power is started in step S59.

Accordingly, at the vehicle side, reception of electric power is started in step S17.

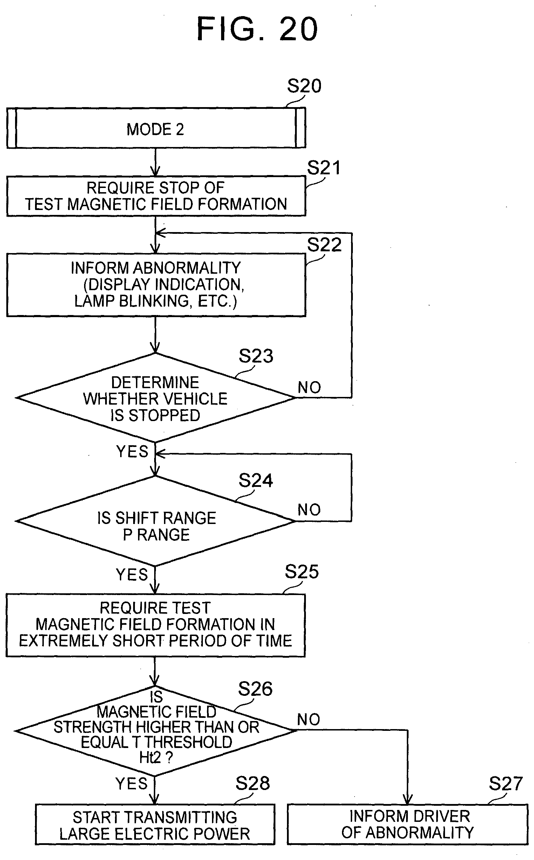

FIG. 20 is a flowchart for illustrating the process of the operation mode 2 that is executed in step S20 of FIG. 16. The operation mode 2 is a mode in which detection of the distance is not carried out with the use of the power receiving unit 200 by forming the test magnetic field and that is executed, for example, when the driver retries parking.

As shown in FIG. 20, when the process of the operation mode 2 is started in step S20, a stop of formation of the test magnetic field is required in step S21. In step S22, the driver is informed through display indication, lamp blinking, or the like, of an abnormality that reception of electric power is not allowed even when the moving distance exceeds the assumed range. In response to this, the driver manually adjusts the parking position.

In step S23, it is determined whether the vehicle has stopped. When a stop of the vehicle is not determined, the abnormality is continuously informed in step S22. When a stop of the vehicle has been determined in step S23, the process proceeds to step S24, and it is determined whether the shift range is the P range.

The process is stopped until it is determined in step S24 that the shift range has been set to the P range. When it has been determined in step S24 that the shift range has been set to the P range, it is presumable that the vehicle does not move, so the test magnetic field formation request (small electric power transmission request) in an extremely short time (about 1 second) is issued in step S25. It is determined in step S26 whether the magnetic field strength detected by the power receiving unit 200 is higher than or equal to the threshold Ht2.

In step S26, it is determined whether reception of electric power is possible as a result of driver's manual position alignment. The threshold Ht2 is set to a value lower than the threshold Ht1 as described above with reference to FIG. 17. When the magnetic field strength is higher than or equal to the threshold Ht2 in step S26, the process proceeds to step S28, and transmission of large electric power is started. On the other hand, when the magnetic field strength is not higher than or equal to the threshold Ht2 in step S26, the process proceeds to step S27, and the driver is informed of an abnormality that charging is impossible.

As described above, in the present embodiment, not only guiding of parking with the use of the camera 120 (first guiding control) but also parking assist that uses the test magnetic field (or the test electric field), formed by the power transmitting device 50, and the power receiving unit 200 (second guiding control) is carried out. The electromotive vehicle 10 and the power transmitting device 50 are allowed to be arranged at mutually appropriate positions. When the power receiving unit 200 is not able to detect the magnetic field strength even when the electromotive vehicle 10 is moved to exceed the assumed range, the electromotive vehicle 10 is controlled so as to stop.

With the power receiving device 11 and the power transfer system 1000 according to the present embodiment, it is possible to contactlessly charge the battery 150 mounted on the vehicle body 70 with high efficiency. Even when automatic parking does not succeed, reception of electric power is carried out by determining whether reception of electric power is possible at the time when the driver has manually determined the parking position, so it is possible to increase a charging opportunity without increasing a complicated operation.

The present embodiment is described on the assumption that guiding of parking with the use of the camera 120 (first guiding control) is carried out; however, the first guiding control is not an indispensable configuration. The position of the electromotive vehicle 10 may be aligned to the position of the power transmitting device 50 through only parking assist that uses the test magnetic field (or the test electric field), formed by the power transmitting device 50, and the power receiving unit 200 that detects the test magnetic field (or the test electric field) (second guiding control).

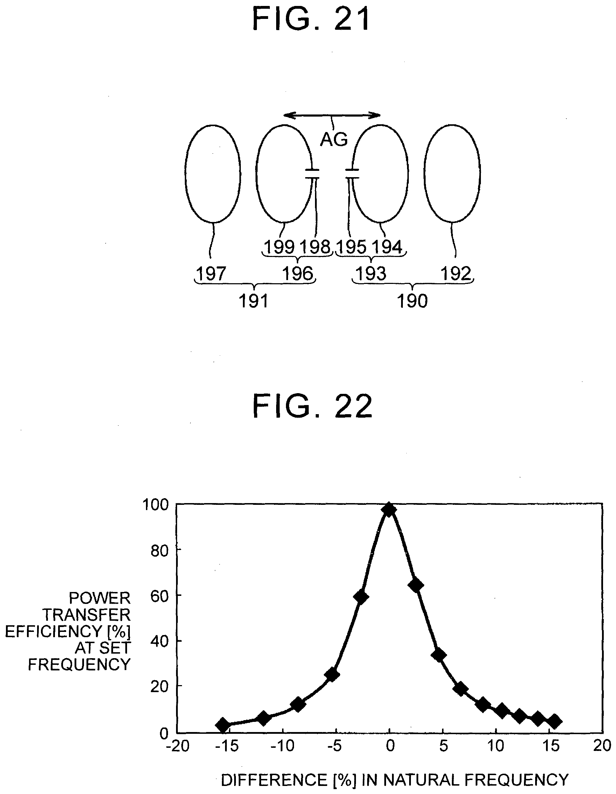

The principle of power transfer will be described. After position alignment that uses the camera 120 and the power receiving unit 200 is carried out, electric power is transferred between the power receiving unit 200 and the power transmitting unit 56. The principle of power transfer in the present embodiment will be described with reference to FIG. 21 to FIG. 24.

In the power transfer system according to the present embodiment, the difference between the natural frequency of the power transmitting unit 56 and the natural frequency of the power receiving unit 200 is smaller than or equal to 10% of the natural frequency of one of the power receiving unit 200 and the power transmitting unit 56. By setting the natural frequency of each of the power transmitting unit 56 and the power receiving unit 200 such that the difference in natural frequency falls within the above range, it is possible to increase the power transfer efficiency. On the other hand, when the difference in natural frequency is larger than 10% of the natural frequency of one of the power receiving unit 200 and the power transmitting unit 56, the power transfer efficiency becomes lower than 10%, so there may occur an inconvenience, such as an increase in the charging time of the battery 150.

Here, the natural frequency of the power transmitting unit 56 means an oscillation frequency in the case where the electric circuit formed of the inductance of the power transmitting coil 58 and the capacitance of the power transmitting coil 58 freely oscillates when the capacitor 59 is not provided. When the capacitor 59 is provided, the natural frequency of the power transmitting unit 56 means an oscillation frequency in the case where the electric circuit formed of the capacitance of the power transmitting coil 58, the capacitance of the capacitor 59 and the inductance of the power transmitting coil 58 freely oscillates. In the above-described electric circuits, the natural frequency at the time when braking force and electrical resistance are set to zero or substantially zero is also called the resonance frequency of the power transmitting unit 56.

Similarly, the natural frequency of the power receiving unit 200 means an oscillation frequency in the case where the electric circuit formed of the inductance of the power receiving coil 22 and the capacitance of the power receiving coil 22 freely oscillates when the capacitor 23 is not provided. When the capacitor 23 is provided, the natural frequency of the power receiving unit 200 means an oscillation frequency in the case where the electric circuit formed of the capacitance of the power receiving coil 22, the capacitance of the capacitor 23 and the inductance of the power receiving coil 22 freely oscillates. In the above-described electric circuits, the natural frequency at the time when braking force and electrical resistance are set to zero or substantially zero is also called the resonance frequency of the power receiving unit 200.

The simulation result obtained by analyzing the correlation between a difference in natural frequency and a power transfer efficiency will be described with reference to FIG. 21 and FIG. 22. FIG. 21 is a view that shows a simulation model of a power transfer system. The power transfer system includes a power transmitting device 190 and a power receiving device 191. The power transmitting device 190 includes a coil 192 (electromagnetic induction coil) and a power transmitting unit 193. The power transmitting unit 193 includes a coil 194 (primary coil) and a capacitor 195 provided in the coil 194. The power receiving device 191 includes a power receiving unit 196 and a coil 197 (electromagnetic induction coil). The power receiving unit 196 includes a coil 199 and a capacitor 198 connected to the coil 199 (secondary coil).

The inductance of the coil 194 is set to Lt, and the capacitance of the capacitor 195 is set to C1. The inductance of the coil 199 is set to Lr, and the capacitance of the capacitor 198 is set to C2. When the parameters are set in this way, the natural frequency f1 of the power transmitting unit 193 is expressed by the following mathematical expression (1), and the natural frequency f2 of the power receiving unit 196 is expressed by the following mathematical expression (2).

$$f1 = 1/\{2\pi(Lt\times C1)^{1/2}\} \qquad (1)$$

$$f2 = 1/\{2\pi(Lr\times C2)^{1/2}\} \qquad (2)$$

Here, FIG. 22 shows the correlation between a difference in natural frequency of each of the power transmitting unit 193 and the power receiving unit 196 and a power transfer efficiency in the case where the inductance Lr and the capacitances C1, C2 are fixed and only the inductance Lt is varied. In this simulation, a relative positional relationship between the coil 194 and the coil 199 is fixed, and, furthermore, the frequency of current that is supplied to the power transmitting unit 193 is constant.

As shown in FIG. 22, the abscissa axis represents a difference Df (%) in natural frequency, and the ordinate axis represents a power transfer efficiency (%) at a set frequency. The difference Df (%) in natural frequency is expressed by the following mathematical expression (3).

$$\text{Difference in natural frequency} = \{(f1\text{-}f2)/f2\}\times 100(\%) \qquad (3)$$

As is apparent from FIG. 22, when the difference (%) in natural frequency is $\pm 0\%$, the power transfer efficiency is close to 100%. When the difference (%) in natural frequency is $\pm 5\%$, the power transfer efficiency is 40%. When the difference (%) in natural frequency is $\pm 10\%$, the power transfer efficiency is 10%. When the difference (%) in natural frequency is $\pm 15\%$, the power transfer efficiency is 5%.

It is found that, by setting the natural frequency of each of the power transmitting unit and the power receiving unit such that the absolute value of the difference (%) in natural frequency (difference in natural frequency) is smaller than or equal to 10% of the natural frequency of the power receiving unit 196, it is possible to increase the power transfer efficiency. It is found that, by setting the natural frequency of each of the power transmitting unit and the power receiving unit such that the absolute value of the difference (%) in natural frequency is smaller than or equal to 5% of the natural frequency of the power receiving unit 196, it is possible to further increase the power transfer efficiency. The electromagnetic field analyzation software application (JMAG (trademark): produced by JSOL Corporation) is employed as a simulation software application.

Next, the operation of the power transfer system according to the present embodiment will be described. As described above, the power transmitting coil 58 (see FIG. 7, and the like) is supplied with alternating-current power from the high-frequency power supply device 64. At this time, electric power is supplied such that the frequency of alternating current flowing through the power transmitting coil 58 becomes a predetermined frequency. When current having the predetermined frequency flows through the power transmitting coil 58, an electromagnetic field that oscillates at the predetermined frequency is formed around the power transmitting coil 58.

The power receiving coil 22 is arranged within a predetermined range from the power transmitting coil 58, and the power receiving coil 22 receives electric power from the electromagnetic field formed around the power transmitting coil 58. In the present embodiment, a so-called helical coil is employed as each of the power receiving coil 22 and the power transmitting coil 58. A magnetic field or electric field that oscillates at the predetermined frequency is formed around the power transmitting coil 58, and the power receiving coil 22 mainly receives electric power from the magnetic field.

Here, the magnetic field having the predetermined frequency, formed around the power transmitting coil 58, will be described. The "magnetic field having the predetermined frequency" typically correlates with the power transfer efficiency and the frequency of current that is supplied to the power transmitting coil 58. The correlation between the power transfer efficiency and the frequency of current that is supplied to the power transmitting coil 58 will be described. The power transfer efficiency at the time when electric power is transferred from the power transmitting coil 58 to the power receiving coil 22 varies depending on various factors, such as a distance between the power transmitting coil 58 and the power receiving coil 22. For example, the natural frequency (resonance frequency) of each of the power transmitting unit 56 and the power receiving unit 200 is set to f0, the frequency of current that is supplied to the power transmitting coil 58 is set to f3, and the air gap between the power receiving coil 22 and the power transmitting coil 58 is set to AG.

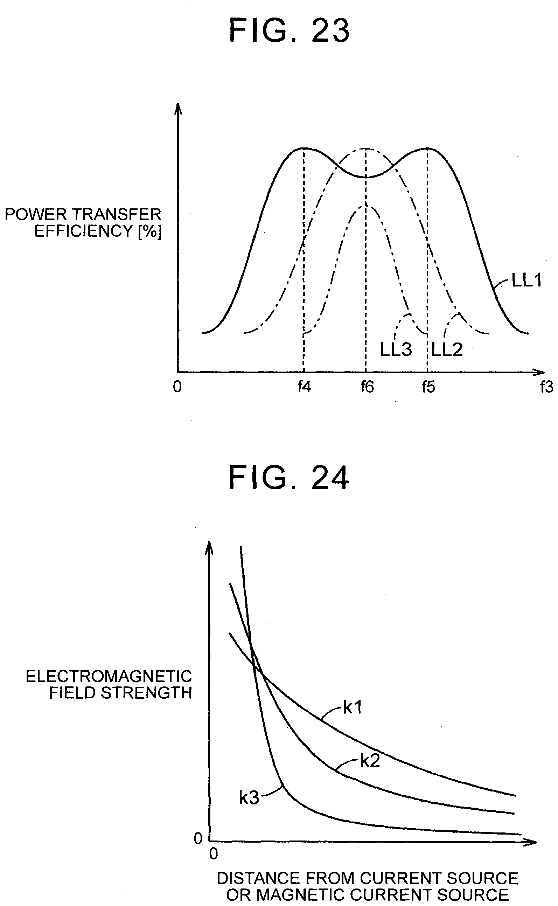

FIG. 23 is a graph that shows the correlation between a power transfer efficiency and the frequency f3 of current that is supplied to the power transmitting coil 58 at the time when the air gap AG is varied in a state where the natural frequency f0 is fixed. The abscissa axis of FIG. 23 represents the frequency f3 of current that is supplied to the power transmitting coil 58, and the ordinate axis of FIG. 23 represents a power transfer efficiency (%).

An efficiency curve LL1 schematically shows the correlation between a power transfer efficiency and the frequency f3 of current that is supplied to the power transmitting coil 58 when the air gap AG is small. As indicated by the efficiency curve LL1, when the air gap AG is small, the peak of the power transfer efficiency appears at frequencies f4, f5 (f4 < f5). When the air gap AG is increased, two peaks at which the power transfer efficiency is high vary so as to approach each other.

As indicated by an efficiency curve LL2, when the air gap AG is increased to be longer than a predetermined distance, the number of the peaks of the power transfer efficiency is one, the power transfer efficiency becomes a peak when the frequency of current that is supplied to the power transmitting coil 58 is f6. When the air gap AG is further increased from the state of the efficiency curve LL2, the peak of the power transfer efficiency reduces as indicated by an efficiency curve LL3.

For example, the following first method is conceivable as a method of improving the power transfer efficiency. In the first method, by varying the capacitance of the capacitor 59 and the capacitance of the capacitor 23 in accordance with the air gap AG while the frequency of current that is supplied to the power transmitting coil 58 is constant, the characteristic of power transfer efficiency between the power transmitting unit 56 and the power receiving unit 200 is varied. Specifically, the capacitance of the capacitor 59 and the capacitance of the capacitor 23 are adjusted such that the power transfer efficiency becomes a peak in a state where the frequency of current that is supplied to the power transmitting coil 58 is constant. In this method, irrespective of the size of the air gap AG, the frequency of current flowing through the power transmitting coil 58 and the power receiving coil 22 is constant. As a method of varying the characteristic of power transfer efficiency, a method of utilizing a matching transformer provided between the power transmitting device 50 and the high-frequency power supply device 64, a method of utilizing the DC/DC converter 142, or the like, may be employed.

In the second method, the frequency of current that is supplied to the power transmitting coil 58 is adjusted on the basis of the size of the air gap AG. For example, as shown in FIG. 23, when the power transfer characteristic becomes the efficiency curve LL1, current having the frequency f4 or the frequency f5 is supplied to the power transmitting coil 58. When the frequency characteristic becomes the efficiency curve LL2 or the efficiency curve LL3, current having the frequency f6 is supplied to the power transmitting coil 58. In this case, the frequency of current flowing through the power transmitting coil 58 and the power receiving coil 22 is varied in accordance with the size of the air gap AG.

In the first method, the frequency of current flowing through the power transmitting coil 58 is a fixed constant frequency, and, in the second method, the frequency of current flowing through the power transmitting coil 58 is a frequency that appropriately varies with the air gap AG. Through the first method, the second method, or the like, current having the predetermined frequency set such that the power transfer efficiency is high is supplied to the power transmitting coil 58. When current having the predetermined frequency flows through the power transmitting coil 58, a magnetic field (electromagnetic field) that oscillates at the predetermined frequency is formed around the power transmitting coil 58.

The power receiving unit 200 receives electric power from the power transmitting unit 56 through at least one of a magnetic field that is formed between the power receiving unit 200 and the power transmitting unit 56 and that oscillates at the predetermined frequency and an electric field that is formed between the power receiving unit 200 and the power transmitting unit 56 and that oscillates at the predetermined frequency. Thus, the "magnetic field that oscillates at the predetermined frequency" is not necessarily a magnetic field having a fixed frequency, and the "electric field that oscillates at the predetermined frequency" is also not necessarily an electric field having a fixed frequency.

In the above-described embodiment, the frequency of current that is supplied to the power transmitting coil 58 is set by focusing on the air gap AG; however, the power transfer efficiency also varies on the basis of other factors, such as a deviation in horizontal position between the power transmitting coil 58 and the power receiving coil 22, so the frequency of current that is supplied to the power transmitting coil 58 may possibly be adjusted on the basis of those other factors.

The embodiment in which a helical coil is employed as each resonance coil. However, in the case where an antenna, such as a meander line, is employed as each resonance coil, the electric field having the predetermined frequency is formed around the power transmitting coil 58 when current having the predetermined frequency flows through the power transmitting coil 58. Electric power is transferred between the power transmitting unit 56 and the power receiving unit 200 through the electric field.

In the power transfer system according to the present embodiment, a near field (evanescent field) in which the static electromagnetic field of an electromagnetic field is dominant is utilized. Thus, power transmitting and power receiving efficiencies are improved. FIG. 24 is a graph that shows the correlation between a distance from a current source (magnetic current source) and the strength of an electromagnetic field. As shown in FIG. 24, the electromagnetic field consists of three components. The curve k1 is a component that is inversely proportional to the distance from a wave source, and is called radiation electromagnetic field. The curve k2 is a component that is inversely proportional to the square of the distance from the wave source, and is called induction electromagnetic field. In addition, the curve k3 is a component that is inversely proportional to the cube of the distance from the wave source, and is called static electromagnetic field. Where the wavelength of the electromagnetic field is $\lambda$, a distance at which the strengths of the radiation electromagnetic field, induction electromagnetic field and static electromagnetic field are substantially equal to one another may be expressed as $\lambda/2\pi$.

The static electromagnetic field is a region in which the strength of electromagnetic field steeply reduces with a distance from a wave source, and, in the power transfer system according to the present embodiment, a near field (evanescent field) in which the static electromagnetic field is dominant is utilized to transfer energy (electric power). That is, by resonating the power transmitting unit 56 and the power receiving unit 200 (for example, a pair of LC resonant coils) having the close natural frequencies in the near field in which the static electromagnetic field is dominant, energy (electric power) is transferred from the power transmitting unit 56 to the other power receiving unit 200.

The static electromagnetic field does not propagate energy over a long distance, so the resonance method is able to transmit electric power with less loss of energy in comparison with an electromagnetic wave that transmits energy (electric power) through the radiation electromagnetic field that propagates energy over a long distance. In this way, in the power transfer system, by resonating the power transmitting unit and the power receiving unit through the electromagnetic field, electric power is contactlessly transferred between the power transmitting unit and the power receiving unit.

Such an electromagnetic field that is formed between the power receiving unit and the power transmitting unit may be, for example, called a near field resonance coupling field. As in the case of the power receiving unit 200 indicated by the dashed line in FIG. 2, a coupling coefficient $\kappa$ is smaller than or equal to 0.7 at the time when electric power is transferred in a state where the power receiving unit and the power transmitting unit are brought close to each other. The coupling coefficient $\kappa$ is not limited to such values; it may be various values.

Coupling between the power transmitting unit 56 and the power receiving unit 200 in power transfer according to the present embodiment is, for example, called magnetic resonance coupling, magnetic field resonance coupling, near field resonance coupling, electromagnetic field resonance coupling, or electric field resonance coupling. The electromagnetic field resonance coupling means coupling that includes the magnetic resonance coupling, the magnetic field resonance coupling and the electric field resonance coupling.

Because a coil-shaped antenna is employed as each of the power transmitting coil 58 of the power transmitting unit 56 and the power receiving coil 22 of the power receiving unit 200, which are described in the specification, the power transmitting unit 56 and the power receiving unit 200 are mainly coupled through a magnetic field, and magnetic resonance coupling or magnetic field resonance coupling is formed between the power transmitting unit 56 and the power receiving unit 200.

For example, an antenna, such as a meander line, may be employed as each of the power transmitting coil 58 and the power receiving coil 22. In this case, the power transmitting unit 56 and the power receiving unit 200 are mainly coupled through an electric field. At this time, electric field resonance coupling is formed between the power transmitting unit 56 and the power receiving unit 200. In this way, in the present embodiment, electric power is contactlessly transferred between the power receiving unit 200 and the power transmitting unit 56. In this way, at the time when electric power is contactlessly transferred, an magnetic field is mainly formed between the power receiving unit 200 and the power transmitting unit 56. Thus, in the above-described embodiment, there are portions described by focusing on the magnetic field strength. However, similar operation and advantageous effects are obtained when focusing on the electric field strength or the electromagnetic field strength as well.

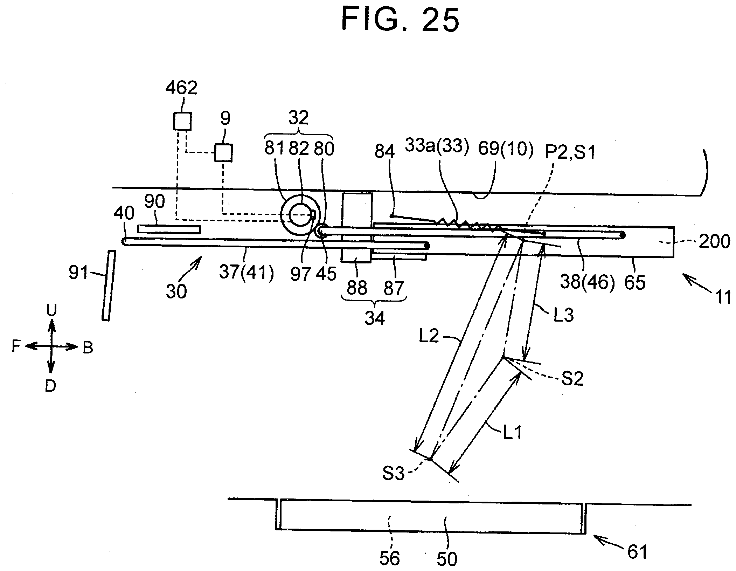

A first alternative embodiment will be described. FIG. 25 is a side view that shows the power receiving unit 200, the casing 65 and the drive mechanism 30 at the time when the electromotive vehicle 10 is stopped at a predetermined position according to the first alternative embodiment.

When the power receiving unit 200 is arranged at the detection position S2, the power receiving unit 200 is able to detect the strength of a magnetic field or electric field that is formed by the power transmitting unit 56 of the external power supply device 61 (see FIG. 5) at a place at which the power receiving unit 200 is located. When the power receiving unit 200 is arranged at the power receiving position S3, the power receiving unit 200 is able to contactlessly receive electric power through a magnetic field or electric field that is formed by the power transmitting unit 56 of the external power supply device 61 (see FIG 5). In the present alternative embodiment as well, the detection position S2 and the power receiving position S3 are located obliquely downward with respect to the vertical direction when viewed from the retracted position S1. The power receiving position S3 is located obliquely downward with respect to the vertical direction when viewed from the detection position S2.

In the present alternative embodiment as well, a distance L1 between the power receiving position S3 and the detection position S2 is shorter than a distance L2 between the power receiving position S3 and the retracted position S1. In the vertical direction as well, a distance between the power receiving position S3 and the detection position S2 is shorter than a distance between the power receiving position S3 and the retracted position S1.

In the present alternative embodiment, the distance L1 between the detection position S2 and the power receiving position S3 is longer than the distance L3 between the detection position S2 and the retracted position S1. Preferably, in the vertical direction as well, the distance between the detection position S2 and the power receiving position S3 is longer than a distance between the detection position S2 and the retracted position S1.

With this configuration as well, the situation of the magnetic field that is detected by the power receiving unit 200 at the detection position S2 is close to the situation of the magnetic field that is received by the power receiving unit 200 at the time when the power receiving unit 200 is actually arranged at the power receiving position S3, as compared to the situation of the magnetic field that is detected by the power receiving unit 200 at the retracted position S1. It is possible to acquire the relative positional relationship between the power receiving device 11 and the power transmitting device 50 with further high accuracy, and it is possible to align the position of the power receiving device 11 to the position of the power transmitting device 50 with high accuracy.

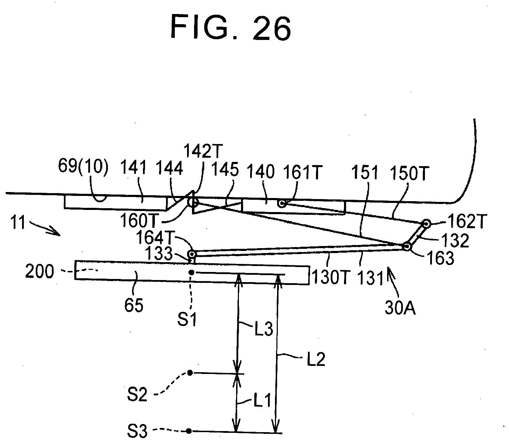

A second alternative embodiment will be described. FIG. 26 is a side view that shows the power receiving device 11 including a drive mechanism 30A according to the second alternative embodiment. FIG. 26 shows the power receiving device 11 (the power receiving unit 200, the casing 65 and the drive mechanism 30A) at the time when the electromotive vehicle 10 is stopped at a predetermined position.

In the present alternative embodiment, the detection position S2 and the power receiving position S3 are located below (just below) in the vertical direction when viewed from the retracted position S1. The power receiving unit 200 is able to move downward in a straight line while keeping its horizontal position or move upward in a straight line while keeping its horizontal position. A distance L1 between the power receiving position S3 and the detection position S2 is shorter than a distance L2 between the power receiving position S3 and the retracted position S1. Preferably, as shown in FIG. 26, the distance L1 between the detection position S2 and the power receiving position S3 is shorter than a distance L3 between the detection position S2 and the retracted position S1.

The power receiving device 11 includes the power receiving unit 200 and the drive mechanism 30A that supports the power receiving unit 200. The casing 65 is supported by the drive mechanism 30A in a state where the casing 65 is located in proximity to the floor panel 69. In a state shown in FIG. 26, the casing 65 is fixed at the retracted position S1, and the power receiving unit 200 is located so as to include the retracted position S1.

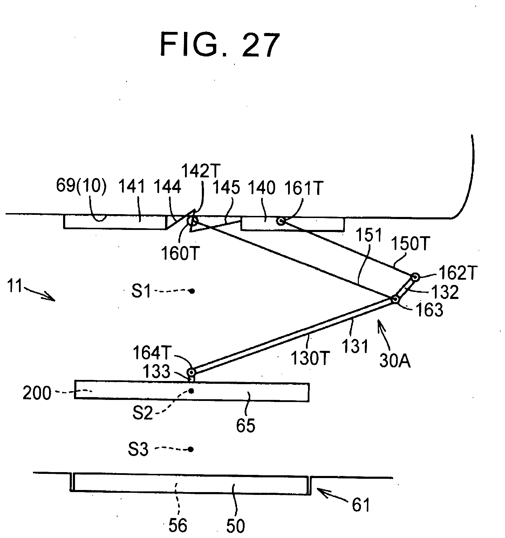

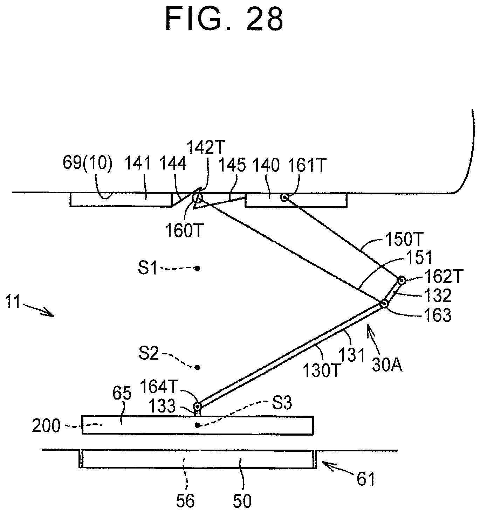

The drive mechanism 30A is also able to move the power receiving unit 200 toward the power transmitting unit 56. The drive mechanism 30A is able to move the power receiving unit 200 from the retracted position S1 (see FIG. 26) to the detection position S2 (see FIG. 26 and FIG. 27), move the power receiving unit 200 from the detection position S2 to the power receiving position S3 (see FIG. 26 and FIG 28) and move the power receiving unit 200 from the retracted position S1 to the power receiving position S3.

The drive mechanism 30A is also able to move the power receiving unit 200 away from the power transmitting unit 56. In other words, the drive mechanism 30A is able to move the power receiving unit 200 from the power receiving position S3 (see FIG. 26 and FIG. 28) to the retracted position S1 (see FIG. 26), move the power receiving unit 200 from the detection position S2 (see FIG. 26 and FIG. 27) to the retracted position S1 and move the power receiving unit 200 from the power receiving position S3 (see FIG. 26 and FIG. 28) to the detection position S2.

The drive mechanism 30A includes an arm 130T, a spring mechanism 140, a drive unit 141 and support members 150T, 151. The arm 130T includes a long shaft portion 131, a short shaft portion 132 connected to one end of the long shaft portion 131, and a connecting shaft 133 connected to the other end of the long shaft portion 131. The short shaft portion 132 is integrally connected to the long shaft portion 131 so as to bend with respect to the long shaft portion 131. The connecting shaft 133 is connected to the top face of the casing 65. The connecting shaft 133 and the long shaft portion 131 are connected to each other by a hinge 164T.

One end of the support member 151 and the arm 130T are connected to each other by a hinge 163. One end of the support member 151 is connected to a connecting portion between the long shaft portion 131 and the short shaft portion 132. A fixing plate 142T is fixed to the other end of the support member 151. The fixing plate 142T is provided on the floor panel 69 so as to be rotatable by the hinge 160T.

One end of the support member 150T is connected to an end of the short shaft portion 132 by a hinge 162T. The other end of the support member 150T is rotatably supported on the floor panel 69 by a hinge 161T. The drive unit 141 is fixed to the bottom face of the floor panel 69. For example, a pneumatic cylinder, or the like, is employed as the drive unit 141. The drive unit 141 includes a piston 144. The distal end of the piston 144 is connected to the fixing plate 142T.

The spring mechanism 140 is provided on the floor panel 69, and a spring is accommodated inside the spring mechanism 140. A connecting piece 145 connected to the spring accommodated inside is provided at an end of the spring mechanism 140, and the connecting piece 145 is connected to the fixing plate 142T. The spring mechanism 140 applies urging force to the fixing plate 142T so as to pull the fixing plate 142T. A connecting position of the fixing plate 142T with the connecting piece 145 and a connecting position of the fixing plate 142T with the piston 144 are arranged across the hinge 160T.

The operation of each member at the time when the power receiving unit 200 is moved toward the power transmitting unit 56 will be described with reference to FIG. 26 to FIG. 28. When the power receiving unit 200 is moved downward from the state shown in FIG. 26 (state where the power receiving unit 200 is arranged at the retracted position S1), the drive unit 141 pushes out the piston 144, and the piston 144 presses the fixing plate 142T. When the fixing plate 142T is pressed by the piston 144, the fixing plate 142T rotates about the hinge 160T. At this time, the spring in the spring mechanism 140 extends.

As shown in FIG. 27, when the power receiving unit 200 is moved downward, the drive unit 141 rotates the fixing plate 142T against the tensile force of the spring mechanism 140. The fixing plate 142T and the support member 151 are integrally connected to each other. Therefore, when the fixing plate 142T rotates, the support member 151 also rotates about the hinge 160T. When the support member 151 rotates, the arm 130T also moves. At this time, the support member 150T rotates about the hinge 161T while supporting an end of the arm 130T. The connecting shaft 133 moves toward the vertically downward direction, and the power receiving unit 200 also moves toward the vertically downward direction.

When the power receiving unit 200 is moved downward by a predetermined distance from the retracted position S1 (retracted state), the power receiving unit 200 is arranged at the detection position S2 as shown in FIG. 27. The detection position S2 is located below (just below) in the vertical direction when viewed from the retracted position S1. When the power receiving unit 200 is arranged at the detection position S2, the drive unit 141 stops the rotation of the fixing plate 142T.

A ratchet (switching mechanism), or the like, may be provided at the rotary shaft of the fixing plate 142T, and the rotation of the drive unit 141 may be stopped by the ratchet. In this case, the ratchet inhibits rotation of the fixing plate 142T in a direction in which the power receiving unit 200 is moved downward, while the ratchet permits rotation of the fixing plate 142T in a direction in which the power receiving unit 200 is displaced upward.

When the power receiving unit 200 reaches the detection position S2, the ratchet restricts rotation of the fixing plate 142T in the direction in which the power receiving unit 200 is moved downward, while the drive unit 141 is continued to be driven. Because power from the drive unit 141 is larger than tensile force from the spring mechanism 140, upward displacement of the power receiving unit 200 is inhibited by the ratchet, and downward movement of the power receiving unit 200. is inhibited by the ratchet. In a state where the power receiving unit 200 is arranged at the detection position S2, the magnetic field strength of the test magnetic field is detected with the use of the power receiving unit 200.

The distance between the power transmitting device 50 and the power receiving device 11 is detected on the basis of the magnetic field strength detected with the use of the power receiving unit 200. On the basis of information about the distance, the electromotive vehicle 10 is further guided toward the power transmitting device 50, and the position of the power receiving device 11 is aligned to the position of the power transmitting device 50. When position alignment is completed, the drive unit 141 further rotates the fixing plate 142T against the tensile force of the spring mechanism 140.

The fixing plate 142T and the support member 151 are integrally connected to each other. Therefore, when the fixing plate 142T rotates, the support member 151 also rotates about the hinge 160T. When the support member 151 rotates, the arm 130T also moves. At this time, the support member 150T rotates about the hinge 161T while supporting the end of the arm 130T. The connecting shaft 133 moves toward the vertically downward direction, and the power receiving unit 200 also moves toward the vertically downward direction.

When the power receiving unit 200 is moved downward by a predetermined distance from the detection position S2, the power receiving unit 200 is arranged at the power receiving position S3 as shown in FIG. 28. The power receiving position S3 is located below (just below) in the vertical direction when viewed from the detection position S2. When the power receiving unit 200 is arranged at the power receiving position S3, the drive unit 141 stops the rotation of the fixing plate 142T.

A ratchet (switching mechanism), or the like, may be provided at the rotary shaft of the fixing plate 142T, and the rotation of the drive unit 141 may be stopped by the ratchet. In this case, the ratchet inhibits rotation of the fixing plate 142T in a direction in which the power receiving unit 200 is moved downward, while the ratchet permits rotation of the fixing plate 142T in a direction in which the power receiving unit 200 is displaced upward.

When the power receiving unit 200 reaches the power receiving position S3, the ratchet restricts rotation of the fixing plate 142T in the direction in which the power receiving unit 200 is moved downward, while the drive unit 141 is continued to be driven. Because power from the drive unit 141 is larger than tensile force from the spring mechanism 140, upward displacement of the power receiving unit 200 is inhibited by the ratchet, and downward movement of the power receiving unit 200 is inhibited by the ratchet. After the power receiving unit 200 stops at the power receiving position S3, power transfer is started between the power receiving unit 200 and the power transmitting unit 56.

When charging of the battery is completed, the drive unit 141 stops being driven. When no pressing force is applied from the drive unit 141 to the fixing plate 142T, the fixing plate 142T rotates by tensile force from the spring mechanism 140. When the fixing plate 142T rotates by tensile force from the spring mechanism 140, the support member 151 rotates about the hinge 160T. The ratchet permits rotation of the fixing plate 142T such that the power receiving unit 200 is displaced upward. The power receiving unit 200 is displaced upward. As shown in FIG. 26, when the power receiving unit 200 returns to the retracted position S1, the power receiving unit 200 is fixed by a retaining device (not shown).

The power receiving device 11 includes an angle sensor and a restricting mechanism. The angle sensor is provided at the rotary shaft of the fixing plate 142T, and senses the rotation angle of the rotary shaft. The restricting mechanism restricts rotation of the rotary shaft of the fixing plate 142T. The power receiving unit 200 is moved downward against the tensile force of the spring mechanism 140 under the own weight of the power receiving unit 200. When the angle sensor detects that the power receiving unit 200 is lowered to the power receiving position S3 (power receiving position), the restricting mechanism restricts rotation of the rotary shaft of the fixing plate 142T. Downward movement of the power receiving unit 200 stops.

At the time when the power receiving unit 200 moves upward, the drive unit 141 is driven to move the power receiving unit 200 upward. When the power receiving unit 200 is moved upward to the charging position, the retaining device fixes the power receiving unit 200, and the drive unit 141 stops being driven. With the power receiving device 11 according to the present alternative embodiment, the power receiving unit 200 is displaced up and down in the vertical direction. The power receiving unit 200 is moved downward by driving force from the drive unit 141, and the power receiving unit 200 is moved upward by tensile force from the spring mechanism 140. Instead, the power receiving device 11 that is moved downward under the own weight of the power receiving unit 200 may also be employed.

Even when the power receiving unit 200 is displaced up and down in the vertical direction, the power receiving unit 200 arranged at the detection position S2 detects the strength of a test magnetic field (or a test electric field) that is formed by the power transmitting device 50 at the detection position S2. The position of the power receiving device 11 is aligned to the position of the power transmitting device 50 in prospect of a moving distance before and after upward or downward movement of the power receiving unit 200. Thus, the electromotive vehicle 10 and the power transmitting device 50 are allowed to be arranged at mutually appropriate positions. Thus, with the power receiving device 11 and the power transfer system according to the present alternative embodiment, it is possible to contactlessly charge the battery mounted on the vehicle body with high efficiency.

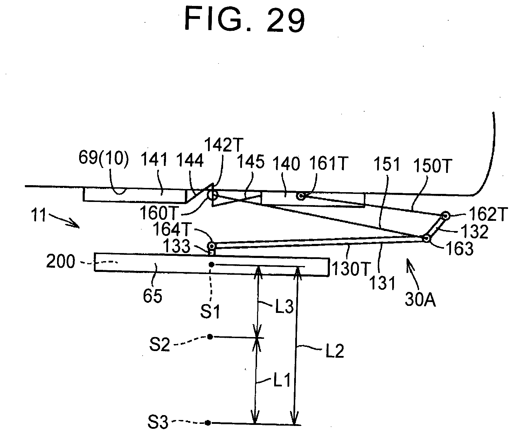

A third alternative embodiment will be described. FIG. 29 is a side view that shows the power receiving unit 200, the casing 65 and the drive mechanism 30 at the time when the electromotive vehicle 10 is stopped at the predetermined position according to the third alternative embodiment.

When the power receiving unit 200 is arranged at the detection position S2, the power receiving unit 200 is able to detect the strength of a magnetic field or electric field that is formed by the power transmitting unit 56 of the external power supply device 61 (see FIG. 5) at a place at which the power receiving unit 200 is located. When the power receiving unit 200 is arranged at the power receiving position S3, the power receiving unit 200 is able to contactlessly receive electric power through a magnetic field or electric field that is formed by the power transmitting unit 56 of the external power supply device 61 (see FIG. 5). In the present alternative embodiment, the distance L1 between the detection position S2 and the power receiving position S3 is longer than the distance L3 between the detection position S2 and the retracted position S1.

With this configuration as well, the situation of the magnetic field that is detected by the power receiving unit 200 at the detection position S2 is close to the situation of the magnetic field that is received by the power receiving unit 200 at the time when the power receiving unit 200 is actually arranged at the power receiving position S3, as compared to the situation of the magnetic field that is detected by the power receiving unit 200 at the retracted position S1. It is possible to acquire the relative positional relationship between the power receiving device 11 and the power transmitting device 50 with further high accuracy, and it is possible to align the position of the power receiving device 11 to the position of the power transmitting device 50 with high accuracy.

In the above-described embodiment and alternative embodiments, the power receiving coil that is used in the power receiving device and the power transmitting coil that is used in the power transmitting device each have a so-called solenoid shape. A magnetic flux generated around a core has a single annular shape, and passes through the center portion of the core having a plate shape in the longitudinal direction of the core.

In the above-described embodiment and alternative embodiments, any one or both of the power receiving coil and the power transmitting coil may have a so-called circular shape. In this case, magnetic fluxes generated around the core each have a so-called doughnut shape, and pass through the center portion of the core having a circular shape in the facing direction. The center portion here is near the center of the outer shape circle of the core and is a hollow portion inside of the coil where no coil is present. Even when a solenoid coil or a circular coil is used for the power receiving coil and/or the power transmitting coil, substantially similar operation and advantageous effects are obtained.

The embodiment and alternative embodiments based on the invention are described above; however, the embodiment and alternative embodiments described above are illustrative and not restrictive in all respects. The scope of the invention is defined by the appended claims. The scope of the invention is intended to encompass all modifications within the scope of the appended claims and equivalents thereof.

The invention is applicable to the power receiving device, the parking assist system and the power transfer system.

**Claims**

1. A power receiving device **characterized by** comprising:

    a power receiving unit (200) configured to move among a retracted position (S1), a detection position (S2) and a power receiving position (S3), the power receiving unit (200) being configured to contactlessly receive electric power from a power transmitting unit (56) in a state where the power receiving unit (200) is arranged at the power receiving position (S3), the power receiving unit (200) being configured to detect a strength of a magnetic field or electric field that is formed by the power transmitting unit (56) in a state where the power receiving unit (200) is arranged at the detection position (S2), a distance (L1) between the power receiving position (S3) and the detection position (S2) being shorter than a distance (L2) between the power receiving position (S3) and the retracted position (S1); and
    a drive mechanism (30) configured to drive the power receiving unit (200) among the retracted position (S1), the detection position (S2) and the power receiving position (S3).

2. The power receiving device according to claim 1, wherein the distance (L1) between the detection position (S2) and the power receiving position (S3) is shorter than a distance between the detection position (S2) and the retracted position (S1).

3. The power receiving device according to claim 1, wherein the distance (L1) between the detection position (S2) and the power receiving position (S3) is longer than a distance (L3) between the detection position (S2) and the retracted position (S1).

4. The power receiving device according to any one of claims 1 to 3, wherein a difference between a natural frequency of the power transmitting unit (56) and a natural frequency of the power receiving unit (200) is smaller than or equal to 10% of the natural frequency of the power receiving unit (200).

5. The power receiving device according to any one of claims 1 to 3, wherein a coupling coefficient between the power receiving unit (200) and the power transmitting unit (56) is smaller than or equal to 0.7.

6. The power receiving device according to any one of claims 1 to 3, wherein the power receiving unit (200) is configured to receive electric power from the power transmitting unit (56) via at least one of a magnetic field that is formed between the power receiving unit (200) and the power transmitting unit (56) and that oscillates at a predetermined frequency and an electric field that is formed between the power receiving unit (200) and the power transmitting unit (56) and that oscillates at a predetermined frequency.

7. A vehicle **characterized by** comprising:

    a floor panel (69);
    a mounted device installed on the floor panel (67E); and
    the power receiving device according to any one of claims 1 to 3, wherein a level of the power receiving unit (200) in a vertical direction is lower than a level of the mounted device (67E) in the vertical direction in a state where the power receiving unit (200) is arranged at the detection position (S2).

8. A parking assist system **characterized by** comprising:

   a vehicle drive unit (430) configured to drive a vehicle (10);
   the power receiving device according to any one of claims 1 to 3; and
   a controller (180) configured to move the vehicle (10) by controlling the vehicle drive unit (430) on the basis of the strength of the magnetic field, detected by the power receiving unit (200).

9. A power transfer system **characterized by** comprising:

   a power transmitting device including a power transmitting unit (56); and
   the power receiving device according to any one of claims 1 to 3, wherein the power receiving device is configured to contactlessly receive electric power transmitted from the power transmitting device in a state where the power receiving device faces the power transmitting device.


**Patentansprüche**

1. Energieempfangsvorrichtung, **dadurch gekennzeichnet, dass** sie umfasst:

   eine Energieempfangseinheit (200), die dazu ausgebildet ist, sich zwischen einer zurückgezogenen Position (S1), eine Detektierposition (S2) und einer Energieempfangsposition (S3) zu bewegen, wobei die Energieempfangseinheit (200) dazu ausgebildet ist, elektrische Energie kontaktlos von einer Energieübertragungseinheit (56) in einem Zustand zu empfangen, in dem die Energieempfangseinheit (200) an der Energieempfangsposition (S3) angeordnet ist, wobei die Energieempfangseinheit (200) dazu ausgebildet ist, eine Stärke eines Magnetfelds oder elektrischen Felds, das durch die Energieübertragungseinheit (56) gebildet wird, in einem Zustand zu detektieren, in dem die Energieempfangseinheit (200) an der Detektierposition (S2) angeordnet ist, wobei ein Abstand (L1) zwischen der Energieempfangsposition (S3) und der Detektierposition (S2) kürzer als ein Abstand (L2) zwischen der Energieempfangsposition (S3) und der zurückgezogenen Position (S1) ist, und einen Antriebsmechanismus (30), der dazu ausgebildet ist, die Energieempfangseinheit (200) zwischen der zurückgezogenen Position (S1), der Detektierposition (S2) und der Energieempfangsposition (S3) anzutreiben.

2. Energieempfangsvorrichtung nach Anspruch 1, wobei der Abstand (L1) zwischen der Detektierposition (S2) und der Energieempfangsposition (S3) kürzer als ein Abstand zwischen der Detektierposition (S2) und der zurückgezogenen Position (S1) ist.

3. Energieempfangsvorrichtung nach Anspruch 1, wobei der Abstand (L1) zwischen der Detektierposition (S2) und der Energieempfangsposition (S3) länger als ein Abstand (L3) zwischen der Detektierposition (S2) und der zurückgezogenen Position (S1) ist.

4. Energieempfangsvorrichtung nach einem beliebigen der Ansprüche 1 bis 3, wobei eine Differenz zwischen einer Eigenfrequenz der Energieübertragungseinheit (56) und einer Eigenfrequenz der Energieempfangseinheit (200) kleiner gleich 10 % der Eigenfrequenz der Energieempfangseinheit (200) ist.

5. Energieempfangsvorrichtung nach einem beliebigen der Ansprüche 1 bis 3, wobei ein Kopplungskoeffizient zwischen der Energieempfangseinheit (200) und der Energieübertragungseinheit (56) kleiner gleich 0,7 ist.

6. Energieempfangsvorrichtung nach einem beliebigen der Ansprüche 1 bis 3, wobei die Energieempfangseinheit (200) dazu ausgebildet ist, elektrische Energie von der Energieübertragungseinheit (56) über mindestens eines aus der Gruppe umfassend ein Magnetfeld, das zwischen der Energieempfangseinheit (200) und der Energieübertragungseinheit (56) gebildet wird und mit einer vorgegebenen Frequenz schwingt, und ein elektrisches Feld, das zwischen der Energieempfangseinheit (200) und der Energieübertragungseinheit (56) gebildet wird und mit einer vorgegebenen Frequenz schwingt, zu empfangen.

7. Fahrzeug, **dadurch gekennzeichnet, dass** es umfasst:

   eine Bodenplatte (69),
   eine an der Bodenplatte installierte angebrachte Vorrichtung (67E), und
   die Energieempfangsvorrichtung nach einem beliebigen der Ansprüche 1 bis 3, wobei in einem Zustand, in dem die Energieempfangseinheit (200) an der Detektierposition (S2) angeordnet ist, eine Höhe der Energieempfangseinheit (200) in einer senkrechten Richtung niedriger als eine Höhe der angebrachten Vorrichtung (67E) in der senkrechten Richtung ist.

8. Parkassistenzsystem, **dadurch gekennzeichnet, dass** es umfasst:

eine Fahrzeugantriebseinheit (430), die dazu ausgebildet ist, ein Fahrzeug (10) anzutreiben,
die Energieempfangsvorrichtung nach einem beliebigen der Ansprüche 1 bis 3, und
eine Steuerung (180), die dazu ausgebildet ist, das Fahrzeug (10) durch Steuern der Fahrzeugantriebseinheit (430) auf der Basis der Stärke des Magnetfelds, die durch die Energieempfangseinheit (200) detektiert wird, zu bewegen.

9. Energieübertragungssystem, **dadurch gekennzeichnet, dass** es umfasst:

eine Energieübertragungsvorrichtung, die eine Energieübertragungseinheit (56) umfasst, und
eine Energieempfangsvorrichtung nach einem beliebigen der Ansprüche 1 bis 3, wobei die Energieempfangsvorrichtung dazu ausgebildet ist, elektrische Energie, die von der Energieübertragungsvorrichtung übertragen wird, in einem Zustand, in dem die Energieempfangsvorrichtung der Energieübertragungsvorrichtung gegenüber angeordnet ist, kontaktlos zu empfangen.

**Revendications**

1. Dispositif de réception d'énergie **caractérisé en ce qu'**il comporte :

une unité de réception d'énergie (200) configurée pour se déplacer entre une position rétractée (S1), une position de détection (S2) et une position de réception d'énergie (S3), l'unité de réception d'énergie (200) étant configurée pour recevoir sans contact de l'énergie électrique provenant d'une unité de transmission d'énergie (56) dans un état où l'unité de réception d'énergie (200) est disposée dans la position de réception d'énergie (S3), l'unité de réception d'énergie (200) étant configurée pour détecter une force d'un champ magnétique ou d'un champ électrique qui est formé par l'unité de transmission d'énergie (56) dans un état où l'unité de réception d'énergie (200) est disposée dans la position de détection (S2), une distance (L1) entre la position de réception d'énergie (S3) et la position de détection (S2) étant plus courte qu'une distance (L2) entre la position de réception d'énergie (S3) et la position rétractée (S1) ; et
un mécanisme d'entraînement (30) configuré pour entraîner l'unité de réception d'énergie (200) entre la position rétractée (S1), la position de détection (S2) et la position de réception d'énergie (S3).

2. Dispositif de réception d'énergie selon la revendication 1, dans lequel la distance (L1) entre la position de détection (S2) et la position de réception d'énergie (S3) est plus courte qu'une distance entre la position de détection (S2) et la position rétractée (S1).

3. Dispositif de réception d'énergie selon la revendication 1, dans lequel la distance (L1) entre la position de détection (S2) et la position de réception d'énergie (S3) est plus longue qu'une distance (L3) entre la position de détection (S2) et la position rétractée (S1).

4. Dispositif de réception d'énergie selon l'une quelconque des revendications 1 à 3, dans lequel une différence entre une fréquence naturelle de l'unité de transmission d'énergie (56) et une fréquence naturelle de l'unité de réception d'énergie (200) est inférieure ou égale à 10% de la fréquence naturelle de l'unité de réception d'énergie (200).

5. Dispositif de réception d'énergie selon l'une quelconque des revendications 1 à 3, dans lequel un coefficient de couplage entre l'unité de réception d'énergie (200) et l'unité de transmission d'énergie (56) est inférieur ou égal à 0,7.

6. Dispositif de réception d'énergie selon l'une quelconque des revendications 1 à 3, dans lequel l'unité de réception d'énergie (200) est configurée pour recevoir de l'énergie électrique provenant de l'unité de transmission d'énergie (56) par l'intermédiaire d'au moins un d'un champ magnétique qui est formé entre l'unité de réception d'énergie (200) et l'unité de transmission d'énergie (56) et qui oscille à une fréquence prédéterminée et d'un champ électrique qui est formé entre l'unité de réception d'énergie (200) et l'unité de transmission d'énergie (56) et qui oscille à une fréquence prédéterminée.

**7.** Véhicule **caractérisé en ce qu'**il comporte :

un panneau de plancher (69) ;
un dispositif monté installé sur le panneau de plancher (67E) ; et
le dispositif de réception d'énergie selon l'une quelconque des revendications 1 à 3, dans lequel un niveau de l'unité de réception d'énergie (200) dans une direction verticale est inférieur à un niveau du dispositif monté (67E) dans la direction verticale dans un état où l'unité de réception d'énergie (200) est disposée dans la position de détection (S2).

**8.** Système d'aide de stationnement **caractérisé en ce qu'**il comporte :

une unité d'entraînement de véhicule (430) configurée pour entraîner un véhicule (10) ;
le dispositif de réception d'énergie selon l'une quelconque des revendications 1 à 3 ; et
un dispositif de commande (180) configuré pour déplacer le véhicule (10) en commandant l'unité d'entraînement de véhicule (430) sur la base de la force du champ magnétique, détecté par l'unité de réception d'énergie (200).

**9.** Système de transfert d'énergie **caractérisé en ce qu'**il comporte :

un dispositif de transmission d'énergie comprenant une unité de transmission d'énergie (56) ; et
le dispositif de réception d'énergie selon l'une quelconque des revendications 1 à 3, dans lequel le dispositif de réception d'énergie est configuré pour recevoir sans contact de l'énergie électrique transmise depuis le dispositif de transmission d'énergie dans un état où le dispositif de réception d'énergie fait face au dispositif de transmission d'énergie.

# FIG. 1

EP 2 988 966 B1

# FIG. 2

34

# FIG. 3

# FIG. 4

# FIG. 5

# FIG. 6

# FIG. 7

EP 2 988 966 B1

# FIG. 8

FIG. 9

# FIG. 10

# FIG. 11

EP 2 988 966 B1

# FIG. 12

EP 2 988 966 B1

# FIG. 13

# FIG. 14

# FIG. 15

ELECTROMOTIVE VEHICLE  S1

STOP VEHICLE

S2

IS POWER FEEDING BUTTON IN ON STATE ?  — NO

YES  S3

START COMMUNICATION

S4

START PARKING CONTROL

S5

IS DISTANCE DETECTION REQUEST IN ON STATE ?  — NO

YES

A1

EXTERNAL POWER SUPPLY DEVICE

START  — S51

S52

IS THERE COMMUNICATION FROM VEHICLE SIDE ?  — NO

YES  S53

START COMMUNICATION

B1

# FIG. 16

A1

**S6** TURN ON RELAY 146

**S7** SET TEST MAGNETIC FIELD FORMATION REQUEST TO ON STATE

**S8** DETECT MAGNETIC FIELD STRENGTH (DISTANCE MEASUREMENT)

**S9** DOES MOVING DISTANCE OF VEHICLE FALL WITHIN ASSUMED RANGE ?
NO → MODE 2 **S20**
YES

**S10** IS MAGNETIC FIELD STRENGTH HIGHER THAN OR EQUAL TO THRESHOLD Ht1 ?
NO
YES

**S11** OUTPUT STOP COMMAND

**S12** MAGNETIC FIELD STRENGTH IS HIGHER THAN OR EQUAL TO THRESHOLD Ht2, AND DISTANCE, TIME AND TEMPERATURE ARE OK ?
NO → MODE 2 **S20**
YES

**S13** IS SHIFT RANGE P RANGE ?
NO
YES

**S14** SET TEST MAGNETIC FIELD FORMATION REQUEST TO OFF STATE

**S15** TURN OFF RELAY 146

**S16** SET POWER FEEDING REQUEST TO ON STATE

**S17** START RECEIVING ELECTRIC POWER

B1

**S54** IS TEST MAGNETIC FIELD FORMATION REQUEST IN ON STATE ?
NO
YES

**S55** FORM TEST MAGNETIC FIELD

**S56** IS TEST MAGNETIC FIELD FORMATION REQUEST IN OFF STATE ?
NO
YES

**S57** STOP FORMATION OF TEST MAGNETIC FIELD

**S58** IS POWER FEEDING REQUEST IN ON STATE ?
NO
YES

**S59** START TRANSMITTING LARGE ELECTRIC POWER

47

# FIG. 17

# FIG. 18

S101

GUIDING BASED ON MAGNETIC
FIELD STRENGTH DETECTED
BY POWER RECEIVING UNIT

S102

DISTANCE = VEHICLE SPEED
× CYCLE TIME (8.192 [ms])

S103

ACCUMULATE DISTANCE

S104

ACCUMULATED
VALUE OF DISTANCE
>=150 [cm]

NO

YES

S105

SET VEHICLE SPEED
IS SET TO 0 [km/h]

# FIG. 19

# FIG. 20

S20

MODE 2

S21

REQUIRE STOP OF
TEST MAGNETIC FIELD FORMATION

S22

INFORM ABNORMALITY
(DISPLAY INDICATION,
LAMP BLINKING, ETC.)

S23

DETERMINE
WHETHER VEHICLE
IS STOPPED — NO

YES

S24

IS SHIFT RANGE
P RANGE — NO

YES

S25

REQUIRE TEST
MAGNETIC FIELD FORMATION IN
EXTREMELY SHORT PERIOD OF TIME

S26

IS
MAGNETIC FIELD
STRENGTH HIGHER THAN OR
EQUAL T THRESHOLD
Ht2 ? — NO

YES

S28

START TRANSMITTING
LARGE ELECTRIC POWER

S27

INFORM DRIVER
OF ABNORMALITY

# FIG. 21

# FIG. 22

# FIG. 23

POWER TRANSFER
EFFICIENCY [%]

LL1

LL3  LL2

0          f4        f6        f5         f3

# FIG. 24

ELECTROMAGNETIC
FIELD STRENGTH

k1

k2

k3

DISTANCE FROM CURRENT SOURCE
OR MAGNETIC CURRENT SOURCE

# FIG. 25

EP 2 988 966 B1

# FIG. 26

# FIG. 27

# FIG. 28

# FIG. 29

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012080770 A

- JP 2011120387 A